(19) Europäisches Patentamt
European Patent Office
Office européen des brevets

(11) **EP 2 050 533 A1**

(12) **EUROPEAN PATENT APPLICATION**
published in accordance with Art. 153(4) EPC

(43) Date of publication:
**22.04.2009 Bulletin 2009/17**

(51) Int Cl.:
**B23K 35/30** (2006.01)   **C22C 38/40** (2006.01)

(21) Application number: **06782548.9**

(86) International application number:
**PCT/JP2006/315732**

(22) Date of filing: **09.08.2006**

(87) International publication number:
**WO 2008/018128 (14.02.2008 Gazette 2008/07)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Ing Shoji Co., Ltd.**
**Osaka-shi, Osaka 547-0002 (JP)**

(72) Inventors:
• **KAWATSU, Hajime**
**Toyonaka-shi,**
**Osaka 560-0041 (JP)**

• **SHINNYA, Akira**
**Higashiosaka-shi,**
**Osaka 577-0827 (JP)**

(74) Representative: **Hartz, Nikolai**
**Wächtershäuser & Hartz**
**Patentanwälte**
**Weinstrasse 8**
**80333 München (DE)**

(54) **IRON-BASED CORROSION RESISTANT WEAR RESISTANT ALLOY AND DEPOSIT WELDING MATERIAL FOR OBTAINING THE ALLOY**

(57) To provide a high-performance, inexpensive low C-high Si-high Cr-B-Nb type iron-based corrosion-resistant and wear-resistant alloy that is extremely superior in corrosion resistance and wear resistance to 304 stainless steel, high-chromium cast iron and high carbon-high chromium cast-iron-type materials, has a high corrosion-resistant property that would never be obtained from a high carbon-high chromium carbide precipitation-type iron-based wear-resistant alloy and at the same time, a wear-resistant property that is superior to these metals, and further hardly causes brittle peeling that is inherent to high Si-containing steel. This alloy contains, all percentages by weight, C: 0.5 to 2.5% by weight, Si: 2.5 to 4.5%, Mn: 0 to 10% or less, Cr: 15% to 31%, Ni: 0 to 16%, Cu: 7% or less, Mo: 10% or less, B: 0.5% to 3.5%, and $0 \leq Nb + V \leq 8\%$, and in this structure, within a range of $15\% \leq Cr < 27\%$, $(Si \times B) \leq 2014/Cr^2 + 0.083Cr + 1.05$ is satisfied, within a range of $27\% \leq Cr \leq 31\%$, $1.25\% \leq (Si \times B) \leq 6.0\%$ is satisfied, within a range of $15\% \leq Cr < 20\%$, $(Si \times B) \geq 570/Cr^2 - 0.066Cr + 1.145$ is satisfied, and within a range of $20\% \leq Cr \leq 31\%$, $(Si \times B) \geq 1.25$ is satisfied.

FIG 1

**Description**

TECHNICAL FIELD

The present invention relates to a low carbon-high silicon-boron-niobium-high chromium cast steel-type iron-based alloy that is superior in corrosion resistance and wear resistance, more specifically, to a high performance and inexpensive iron-based corrosion-resistant and wear-resistant alloy that is overwhelmingly superior in a corrosion-resistant property and wear-resistant property in comparison with those of 304 stainless steel, high-chromium cast iron, and high carbon-high chromium cast-iron-type material, has a high corrosion-resistant property that would never be obtained from a high carbon-high chromium carbide precipitation-type iron-based wear-resistant alloy and at the same time a wear-resistant property that is superior to that of these metals, and further hardly generate brittle peeling that is inherent to a high-Si content steel, and a clad (hard- surfacing) welding material used for obtaining the same.

BACKGROUND ART

In recent years, refuse incinerating factories, car-shredder fluidizing-layer incinerators, waste oil and waste fluid incinerators and the like have been built and operated. In heat-resistant and wear-resistant portions of these devices, high chromium cast iron is used, and in the devices that are subjected to high-temperature thermal oxidization, for example, SCH13 heat resistant cast steel or the like is used. However, in a short period of time after the start of these operations, those members and devices are worn, burnt to be lost, and subjected to corrosive loss by the treated matters and heat, and there have been strong demands for prolonging the service life thereof.

With respect to the life-prolonging countermeasures for these devices and members, repairing processes by clad welding are mainly carried out on worn-out portions, and a high carbon-high chromium cast iron-type clad welding material that is an iron-based alloy has been mainly used as its welding material. The reasons for this are because the iron-based alloy is inexpensive and it is superior in a wear-resistant property and high-temperature oxidation resistant property. However, these furnace devices and peripheral devices are exposed to such as high-temperature corrosive burning gases and acid dew-point corrosion that occurs upon stopping the furnace, and at present, it becomes difficult to deal with these conditions only by using simple high-temperature oxidation resistant property and wear-resistant property.

That is, unless a superior corrosion-resistant property is also provided, with a superior wear-resistant property possessed by the high carbon-high chromium cast iron-type clad welding material being maintained, it becomes difficult to prolong the service life of these various devices. In particular, with respect to the corrosion resistance, corrosion-resistant properties against chlorine gas, hydrochloric acid, sulfuric acid, diluted sulfuric acid and the like are required.

With respect to these application environments that call for a corrosion-resistant property, an oxidation resistant property and a high-temperature wear-resistant property, stellite that is a cobalt-based alloy is particularly superior in comparison with the iron-based clad welding material, and the application thereof as the cladding material has been proposed. However, this alloy is very expensive in comparison with the iron-based alloy, failing to satisfy the cost-effectiveness balance. For this reason, there have been strong demands for developments of an iron-based clad welding material that is inexpensive and has the same performances (Non-Patent Document 1).

Non-Patent Document 1: "Basics and Applications of Surface Treatment Techniques" (Vol. 1) Textbook for 14th Practical Welding Seminar, East Branch of Welding Society, June 23 to 24, 1988

In addition to these, using expensive alloys having rarity-value metal elements, such as nickel, cobalt and the like, as simple disposable wear-resistant materials is very wasteful from the viewpoint of the international trend of resource-saving movements, and originally, these expensive alloys should be effectively utilized as permanent materials having high value and applications capable of recovering resources; thus, the present inventors have always thought that inexpensive iron-based wear-resistant alloys should be used for disposable applications such as wear-resistant materials.

Then, at present, since the high carbon-high chromium cast-iron-type clad welding material is inexpensive, this has been continuously used in most cases as the iron-based wear-resistant alloy; however, the corrosion-resistant property thereof is extremely inferior to that of cobalt- and nickel-based materials, and this is hardly called as a corrosion-resistant material. The typical composition of the high carbon-high chromium cast-iron-type clad welding material that has been mainly used conventionally is "C: 3 to 6%, Cr: 16 to 36%, Mo: 0 to 3%, Fe: remaining portion."

However, alloys belonging to this type are extremely superior in wear resistance, and although these are iron-based alloys, they are considerably superior in high-temperature oxidation resistance because of the high chromium content, and have been often used for high-temperature wearing applications at 600°C as well as at 600°C or more. One of typical examples thereof is an alloy having the following chemical components: "C: 5.2%, Cr: 32%, Si: 0.6%, Mn: 0.7%, Fe: remaining portion."

This iron-based wear-resistant clad welding metal has a superior wear-resistant property, that is, a wear test value of 5.0 to 10, if indicated by a wear coefficient, with that of SS400 mild steel being set to 100, which is a wear-resistant property about 10 to 20 times higher than that of the mild steel. However, since this has a carbon content that is extremely high, it can be said that the corrosion resistance is not sufficient.

For this reason, the present inventors have tried to develop an inexpensive iron-based alloy that has a wear-resistant property that is the same as, or equivalent to that of this high carbon-high chromium cast-iron-type clad welding alloy, a corrosion-resistant property that is close to that possessed by cobalt alloys, stellites No. 1 and No. 6, and exerts a corrosion-resistant property that is the same as, or higher than that with respect to certain kinds of corrosive media. Here, colmonoy No. 6 alloy has been well known as a nickel-based alloy having a superior wear-resistant property. The wear coefficient WR thereof is 5, which is somewhat superior than WR = 8 of stellite No. 1; however, with respect to the sulfuric acid corrosion resistance, this is inferior to that of the stellite alloy so that the target of the present inventors is still placed on the cobalt-based stellite alloy, and if the corrosion-resistant property of the iron-based alloy becomes higher than that of the cobalt-based alloy, the iron-based alloy has been determined as being superior to that of the nickel-based alloy. The standard compositions of stellite No. 1 and No. 6 are shown below:

[Standard chemical components of cobalt-based alloy: stellite No. 1]

"C: 2.1%, Si:0.8%, Mn: 0.4%, Cr:32.0%, Fe: 2.0%, W: 12.0, Ni: 1.7, Mo: 0.1, Co: remaining portion"

[Standard chemical components of cobalt-based alloy: stellite No. 6]

"C: 1.2%, Si:0.8%, Mn: 0.5%, Cr:27%, Ni: 2.7%, W: 4.5%, Fe: 2.5%, Mo: 0.1%, Co: remaining portion"
Upon reviewing alloy elements contained in these cobalt-based alloys, it is found that large amounts of cobalt, tungsten and the like are contained so that these alloys are composed of very expensive elements. Therefore, since the cobalt-based alloys are very expensive alloys, these do not become profitable when applied to a device having a very wide cladding area from the viewpoint of costs, and it is very difficult to satisfy the cost-effectiveness.
For this reason, the use of this alloy is considered to be limited only to applications in which a cladding process on a portion having an extremely limited small area can exert a great effect. These applications include various valve sheets, for example, a tip of a needle valve, a pump rod, a pump sleeve, a cam shaft and the like. Stellite No. 1 and No. 6 alloys are used for applications calling for three factors as heat resistant, corrosion-resistant and wear-resistant alloys simultaneously, and, in particular, suitably used for applications having a temperature of 600˚C or more, and these are popular alloys in the world. However, at present, these have also been continuously used for applications at 600˚C or less in many cases, so as to carry out a cladding process in devices in which corrosion-resistant and wear-resistant properties are required.
Using alloys containing expensive rare elements for even applications at 600˚C or less as simple wear-resistant members is an anti-social practice from the viewpoints of wasteful use of resources in the world and of exhaustion of resources in the future as described earlier, and expensive rare elements should be used for significant applications having high value, and should also be used for applications capable of recovering resources.
Consequently, the present inventors have proposed a highly wear-resistant "clad welding material and a clad member" that is an inexpensive iron-based alloy and exerts a superior high-temperature oxidation resistant property at a high temperature of 600˚C or more, as one of means for solving these problems and achieving improvements as much as possible, and have granted a patent thereof (Patent Document 1). This patented alloy exerts performances superior to those of stellite No. 1, when cladded on a device calling for a high-temperature wear-resistant property, an oxidation resistant property and a corrosion-resistant property in applications of 600˚C or more, and makes it possible to cut costs to a great degree.
Patent Document 1: Patent No. 3343576
Typical practical examples include: cladding processes for a scraping lifter of a rotary kiln to be used at an ambient temperature of 800 to 900˚C, a falling inlet liner of a clinker cooler to be used from 900 to 1000˚C, a copper-resource recovering clinker grizzly bar used at 900˚C or more, a clinker transporting conveyer bucket of 800˚C, a fluidizing bed furnace boiler tube, a wire of air blowing nozzle and the like, and by many application achievements relating to these cladding processes, the patented alloy has devoted to a great reduction in costs by means of prolonged service life. A typical composition of components and performances of this patented cladding alloy are shown below:

[FREA-METAL chemical components (% by weight) of No. 55 alloy]

Fused metal composition "C: 1.3%, Si: 4.5%, Ni: 3.7%, Mn: 3.6%, Cr: 36%, Fe: remaining portion"
Base material: SUS310S 9 mmt
Hardness: HV977
Wear coefficient: 4.2

First layer Cr analyzed value: 35%

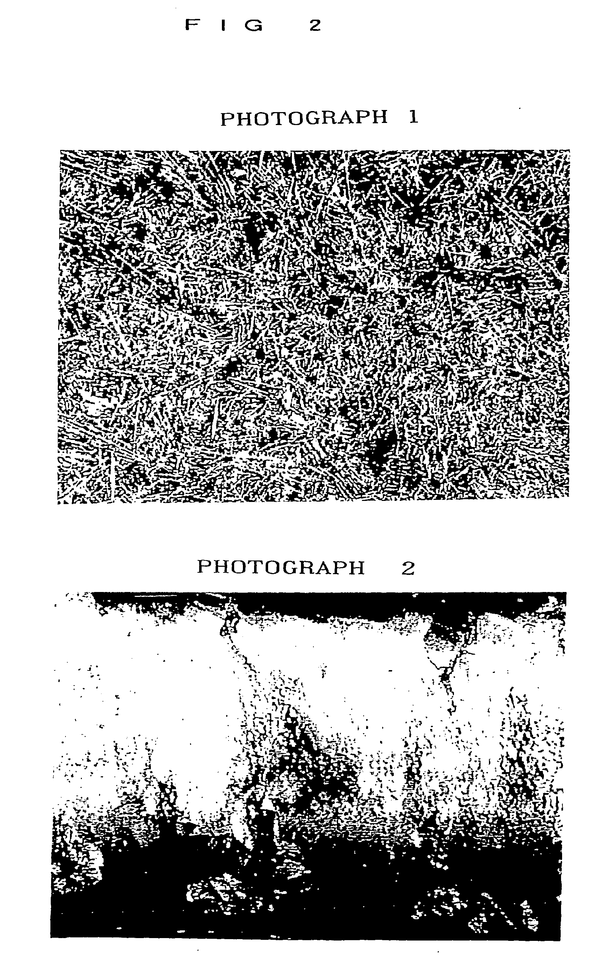

Micro texture: x400 (photograph No. 1 in Fig. 2)

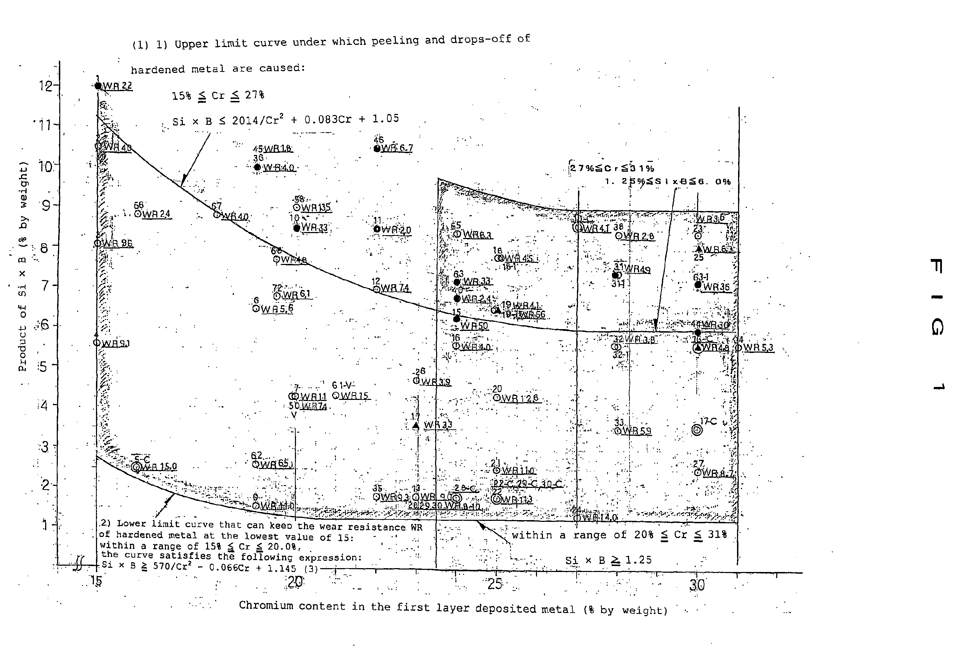

Moreover, a test piece No. 55 that was subjected to a bending process (bending radius: 290 mmR) with its hardened metal being placed inside thereof is shown by photograph No. 2 in Fig. 2. Here, the alloy Nos. are those adopted in composition comparison tests that will be described later (see Fig. 1).

The greatest feature of this patented alloy is that a high Si-content was given to a high chromium iron-based alloy exceeding 30%. Here, Si is very inexpensive in comparison with expensive elements such as V, W, Mo, Co, Ni and the like that give a high-temperature resistant property and a heat resistant property, and when obtained from silica by using a reducing process, it is possible to utilize materials that inexhaustibly exist on the earth. However, the greatest defect of the high Si-containing steel is to make the alloy extremely brittle, and because of this defect, a large amount of addition thereof to an iron-based wear-resistant cladding metal has been avoided even at present. Nevertheless, the present inventors have still been paying attention to characteristics of Si, that is, the fact that it is an inexpensive element that inexhaustibly exists on the earth, its high-temperature oxidation resistant property and its property for allowing chromium carbides to be formed into a needle-shape, and such a high content as not to be used or to be avoided normally, that is, 3.0 to 7.0%, was added thereto.

Incidentally, although a high Si-containing steel referred to as "Silicolloy" has already been produced, this metal was an alloy developed for use in wear-resistant purposes between metals, and its carbon content was in a level of 1/100 so that the amount of precipitation of carbides that give a wear-resistant property was extremely small, failing to be practically used in severely high-temperature grinding wear-resistant applications, as in the case of the application of the patented alloy (Patent Document 2).

Patent Document 2: JP-A No. 54-81115

The deposited metal of a high Si-containing steel has a characteristic of causing slice-shaped surface layer peeling on the surface layer, with the result that, upon carrying out a bending process thereon, there is a fear of scattering of slice-shaped portions. When further pressed and bent strongly, the deposited metal is fractured to drop off the base material. By viewing the bending test piece No. 55 of the wear-resistant alloy, the typical peeling state can be confirmed. Consequently, the patented alloy has been mainly used in the form of a welding rod and a clad welding wire that are hardly subjected to a bending process.

In this manner, the above-mentioned patented alloy has been developed by adding Si hoghly, and the alloy is used for high-temperature wear-resistant applications of 600˚C or more, and makes it possible to provide a high-temperature oxidation resistant property as high as that of SUS310S in spite of the fact that it is an iron-based alloy, and to remarkably improve the high-temperature wear-resistant property and high-temperature hardness by allowing a large amount of needle-shaped chromium carbides that hardly drop off to be precipitated at high temperatures. In particular, under a high-temperature condition from 600 to 1000˚C, the alloy becomes rich in ductility in comparison with a normal temperature state so that its brittleness is alleviated, and further a large amount of Si was solid-deposited on the matrix base in the deposited metal so that it contributes to improvements of the high-temperature oxidation resistance of the matrix, making it possible to endure even at a high temperature of 1000˚C.

In particular, a condition "Cr% $\geq$ -1.6Si% + 37Cr%", which forms a base for constituting the patented alloy, is a two-element correlation formula between Cr and Si that accelerates a large amount of needle-shaped chromium carbide precipitation required for ensuring a superior wear-resistant property at 600˚C or more. Without satisfying this correlation formula, a sufficient precipitation of needle-shaped chromium carbides ($Cr_7C_3$) is not available, resulting in degradation of the high-temperature wear resistance.

The natural characteristic of normal metal is such that, within a high-temperature range of 600˚C to 1000˚C, the hardness of a metal matrix softens extremely so that wear is easily accelerated; however, since needle-shaped carbides are conjugated in the width direction while being entangled with one another over the entire matrix like knitting fibers, selective wear of soft matrix portions is prevented; thus, the above-mentioned patent alloy technique is based upon the fact that by allowing a large amount of high-hardness needle-shaped carbides to be crystallized, high-temperature wear can be prevented. By viewing the texture of this alloy, a precipitation of the remarkable needle-shaped carbides can be confirmed (photograph No. 1 in Fig. 2).

However, the superior characteristic at high temperatures in contrast becomes a serious defect in its brittleness at normal temperature, and the extreme brittleness causes degradation of the bending processability, and when a wear-resistant steel plate cladded with the patented alloy is produced, the resulting product can be only applied to linear items, and with respect to items having a curvature, cladding processes need to be carried out by using a welding wire or a hand welding rod, always resulting in high production costs.

As described above, although the patented alloy can provide performances that are almost equivalent to the stellite alloy, its greatest defect is that the high Si-content easily causes slice-shaped peeling on the surface layer of the deposited metal, making it difficult, in particular, to produce a wear-resistant steel plate having a large area. Moreover, upon carrying out a join-welding process between clad steels formed by using the same alloy, the hardened metal causes peeling when stretched by a welding stress, making it very difficult to carry out the join-welding process.

DISCLOSURE OF THE INVENTION

PROBLEMS TO BE SOLVED BY THE INVENTION

An object of the present invention is to provide a low carbon-high chromium-high Si-boron-niobium-cast- iron-type iron-based corrosion-resistant and wear-resistant alloy that can alleviate brittleness which is a defect of a high Si-containing steel, maintain an overwhelming corrosion-resistant performance in comparison with that of a high chromium cast-iron-type cladding alloy or 304 stainless steel, exerts performances that are the same as, or higher than those of stellites No. 1 and No. 6 with respect to some corrosive environments, and has a wear-resistant property that is the same as, or higher than that of a high carbon-high chromium cast-iron-type cladding alloy or stellites No. 1 and No. 6, and a clad welding material used for obtaining the same.

MEANS FOR SOLVING THE PROBLEMS

In order to achieve the above-mentioned object, in order to improve a sulfuric acid resistant property that is a weak point of an iron-based alloy, the present inventors have tried to find an alloy that is also superior in a hydrochloric acid resistant property by appropriately combining a large amount of Cr and a small amount of Si, Mo, Cu, Ni and the like and using as one model a Worthite alloy (C < 0.07%, Cr20%, Ni25%, Si3.5%, Mo3% and Cu2%) that has been already developed, so as to develop an inexpensive iron-based alloy having a corrosion-resistant property and a wear-resistant property that are the same as, or superior to those of stellites No. 1 and No. 6 that are expensive cobalt-based alloys.

The Worthite alloy is a Cr-Ni-Si-Mo-Cu type stainless steel developed by Worthington Pum Co., Ltd. in the United States, and this is used for sulfuric acid corrosion-resistant applications in chemical plants and boilers exclusively used for burning petroleum. Although the Worthite alloy is used as one model from the viewpoint of sulfuric acid corrosion prevention, the problem with this alloy is that it contains much Ni, which is different from the intention of the present inventors, and that this alloy differs greatly from the attempt to save resources such as rarity-value alloys, which is the original major premise. The Worthite alloy is mainly used as a corrosion-resistant structural material that requires strength, and utilized as, for example, pumps or the like made of stainless cast steel. Therefore, it is important that the metal itself has toughness; however, the alloy becomes brittle because of its high Si-content, and it is assumed that the alloy is designed to have a high Ni-content so as to alleviate the brittleness. Of course, the high Ni-content mainly aims to improve the corrosion-resistant property; however, this causes low hardness, and makes it inferior in the wear-resistant property as a wear-resistant hardened metal material, and the resulting iron-based alloy is not applicable to a wear-resistant alloy in which the present inventors aim to produce.

Since a cladding alloy to be developed by the present inventors basically aims to simultaneously satisfy both of the corrosion-resistant property and the wear-resistant property, stainless steel is used as its base metal in many cases. For this reason, since the Ni content is expected to increase by allowing the deposited metal to pick up Ni from the stainless steel or the like of the base metal, the present inventors set the Ni content originally added to a welding material to 13% in the maximum level so as to save resources. That is, with respect to the Ni content of the developed alloy, it is normally set to 5% or less, and the addition thereof is set to 13% in the maximum level only in a limited occasion. On the other hand, concerning Si, the following arrangement is made.

(1) Brittleness of high Si-containing steel

A high silicon steel plate is one of high Si-containing steels of iron-based metal. One example of components thereof is shown below:
[C:0.12%, Si:4.12%, Mn:0.07%, P:0.07%, S:0.005%, Fe: remaining portion]

The silicon steel plate is mainly used for transformers and motor cores. When the Si content is increased, its magnetic property is desirably made greater; however, the addition of Si of 5% or more causes the steel to become brittle, and further addition of Si makes it difficult to carry out a rolling operation, and causes a difficulty in producing a thin steel plate. Here, Si has such a characteristic that, when only added to simple carbon steel, the resulting steel becomes brittle. In the case where the same amount of Si is added to a high chromium alloy containing much Cr, the tendency of brittleness possessed by Si itself and highly hard and brittle chromium carbides precipitated by the high chromium alloy synergistically accelerate the brittleness of the alloy; therefore, it becomes very difficult to provide ductility to a developed alloy.

(2) Brittleness of high Si-containing steel and effects of C exerted on corrosion resistance and wear resistance

In order to improve the ductility of deposited metal, that is, to prevent the occurrence of peeling, and to improve the corrosion resistance, first, the carbon content is proposed as one of important component elements. A high carbon-high chromium cast-iron-type clad welding material has a very high carbon content, and is included within a cast iron range containing carbon of 4.5 to 6.0%. As a result, a large amount of brittle chromium carbides are precipitated to cause a reduction in Cr content included in the matrix, resulting in extreme degradation of the corrosion resistance. That is, the greatest reason for degradation of the corrosion resistance of various high carbon-high chromium cast-iron-type clad welding materials is in that, in order to obtain a wear-resistant property, a large amount of carbon is contained therein, and carbon is thus bonded with a carbide-forming element having a strong affinity to carbon, that is, chromium, tungsten, vanadium, titanium, niobium, or the like, so that, by allowing a large amount of high-hardness carbides to be precipitated in the metal matrix, the wear-resistant property is ensured.

It is said that the chromium carbide has a high hardness in a range of HV1650 to 2100, the niobium carbide has that of HV2400, the titanium carbide has that of HV2800, the vanadium carbide has that of HV2800 and the tungsten carbide has that in a range of HV2400 to 3000. High chromium cast-iron-type alloys maintain a superior wear-resistant property by these carbides that are precipitated; however, in contrast, the corrosion-resistant property of the deposited metal deteriorates extremely because of the high carbon content.

In general, from an iron-carbon two-element state diagram, it is said that, with the carbon content of 2.0 to 2.1% being set as a border, those below the border are cast steels, while those above the border are cast irons. Moreover, since it is determined that the cast steel having a carbon content of 2.0% or less is superior to the cast iron having a carbon content exceeding 2.0% in its mechanical properties, in particular, in its toughness in the metal matrix, the developed welding alloy has been designed so that the carbon content of the first-layer deposited metal is set to 2% or less. It was assumed that the low carbon content of course contributes to improvements of corrosion resistance.

In the case where the carbon content of a welding material is set to 3.0% or less, upon determining from the amount of precipitation of carbides, a so-called hypo-eutectoid state is exerted, and when one layer is cladded on a mild steel, a sufficient carbide precipitation does not occur on the first deposited metal due to melting-in of the mild steel, resulting in serious degradation of the wear-resistant property. For example, even in the case where a carbon content of 3.0% is given to the welding material, upon cladding one layer on a mild steel or stainless steel base material, the carbon content in the deposited metal varies within a range of 1.8% to 2.1% although it depends on the melt-in depth into the base metal (melt-in depth: about 30% to 40%). This content corresponds to near 2.0% of carbon content that divides the cast steel and the cast iron from each other. Normally, the carbon amount to be contained in a high carbon-high chromium cast-iron-type welding material needs to be set to 4.5% or more so that it is important to maintain a hyper-eutectoid state in which a sufficient carbide can be precipitated even under influences of dilution of mild steel from the first layer. That is, even upon receipt of 30% of melting-in, the carbon content of the first layer deposited metal needs to be set to about 3% or more so as to form a hyper-eutectoid state.

Based upon above description, the upper limit value of the carbon content of the first layer deposited metal of the developed alloy was set to 2.0% or less that divides the cast steel and the cast iron from each other as one target value. For another reason, since the carbon content of stellite No. 1 alloy of the cobalt-based alloy is C: 2.0%, and the criteria of the corrosion-resistant performance of the developed welding material is determined as the same as, or not less than the corrosion resistance performance of stellite No. 1, the carbon content was determined to virtually the same amount.

Table 1 shows comparisons of wear-resistant property depending on differences in carbon contents. Here, alloys No. 41 and No. 42 are high Si-containing steels, and since these contain neither Nb nor B, these are not included within the developed alloy component range; however, since these are desirably used for comparing the wear-resistant property depending on differences in carbon amounts, they were listed.

[Table 1]

| Effects of carbon content exerted on wear-resistant property (% by weight) | | | | | | | | |
|---|---|---|---|---|---|---|---|---|
| Alloy | C | Si | Ni | Cr | Mo | Cu | Hardness | Wear coefficient |
| 41 | 2.0 | 5.0 | 3.3 | 23 | 4.6 | 4.6 | HV616 | 6.3 |
| 42 | 3.0 | 5.1 | 3.3 | 23 | 4.6 | 4.6 | HV679 | 2.5 |

Alloy No. 41 and alloy No. 42 were produced by adjusting them to have virtually the same chemical components except for the carbon contents. Alloy No. 42, which had a higher carbon content, provided a wear-resistant property that is about 2.5 time higher than that of alloy No. 41. This is because, since alloy No. 42 has a higher carbon content, the amount of precipitation of chromium carbides increases so that the wear resistance is improved.

The carbon content is one of factors that cause great adverse effects to the corrosion-resistant property;

however, in the case where the carbon content is reduced so as to improve the corrosion-resistant property, the amount of precipitation of carbides is reduced to cause serious degradation of the wear-resistant property. Therefore, the present inventors have revised component constitutions of a high carbon-high chromium cast iron that allows a large amount of carbides to be precipitated by its high carbon content, and can ensure the wear-resistant property. That is, the target was to develop an alloy which, even when it has an amount of carbon addition in a range of $0.5\% \leq C \leq 2.0$ to $2.5\%$, can ensure a superior wear-resistant property as well as a superior corrosion-resistant property and sufficient toughness. There are various different cladding methods with respect to the clad welding materials, and the respective methods have different melting-in depths and subsequently different dilution rates in the base material, the maximum amount of addition of C was set to 2.5% or less.

(3) Effects of Cr exerted on brittleness and wear-resistant property of high Si-containing steel

Here, Cr is one of alloy elements that give greatest influences to brittleness of a high Si-containing steel. The chromium content of the first layer deposited metal that has been actually cladded by using a welding material having a content of chromium addition of 45% in the maximum, becomes about 23 to 34% upon receipt of a base material dilution in a range of about 25% to 50%, in the case where the base material is a mild steel or an esten steel. In the case of the amount of chromium addition of 25%, the chromium content becomes about 15 to 19%. In the case where SUS304 to 316 is used as a base material, on the assumption of the use of a welding material of Cr: 35%, the chromium content in the first layer deposited metal becomes about 26 to 31%. Although the melting-in depth differs depending on the welding methods, the Cr content of the first layer deposited metal is selected to be set to about "$15\% \leq Cr \leq 31\%$" on average.

The maximum amount of addition of 45% is used for providing a hand welding rod having a base material dilution rate of 50% or more, and when the base material is mild steel, the chromium content of the first layer deposited metal becomes about 23%, and is included in the above-mentioned range. In particular, in the case of a wear-resistant steel plate, this is formed by using one-layer cladding process, and the thickness of the deposited metal becomes about 4 to 6 mm. With respect to the brittleness of the deposited metal obtained by a clad welding material and a wear-resistant steel plate, the behavior of the first layer deposited metal is considered to be most important. Therefore, it is necessary to properly design the range of the chromium content in the first layer deposited metal. The reason for this is because chromium is an element to be contained in a large amount in the developed alloy in comparison with the other alloy elements, and furthermore since this has great influences to the brittleness of the deposited metal, the understanding of the degree of influences of each of the other small-amount added alloys is most essentially determined by the behavior of this element within a predetermined range.

Incidentally, for the necessity of depositing a large amount of needle-shaped chromium carbides so as to provide a superior high-temperature wear-resistant property at temperatures higher than 600˚C, it was very important that the above-mentioned patented alloy satisfies a two-element correlation formula between Cr and Si, "$Cr \geq -1.6Si + 37$ (% by weight) ". In the case where the Cr content is 32% or more, with the Si content being 3% or more, a large amount of needle-shaped chromium carbides are precipitated to cause extreme brittleness and the subsequent peeling on the surface of the hardened metal; this phenomenon has been proved by No. 55 bending test piece (see photograph No. 2 in Fig. 2).

On the contrary to the patented alloy, the developed alloy is not an alloy formed by aiming in particular a high-temperature wear-resistant property, but an alloy formed mainly by aiming to ensure proper ductility of a brittle in high Si-containing steel as well as to improve the corrosion-resistant property thereof by using an iron-based alloy. Therefore, since it is not necessary to satisfy the condition of "$Cr \geq -1.6Si + 37Cr\%$", the amounts of addition of silicon and chromium that cause brittleness of the deposited metal can be reduced in comparison with those of the former; however, the reduction in the amounts of addition of Cr and Si causes a reduction in the amount of precipitated chromium carbides, with the result that the wear-resistant property is lowered extremely although the ductility is recovered.

This phenomenon has been proved by experiments to be discussed below. In the case where, by using the above-mentioned patented alloy as its basic alloy, the amount of Cr addition that gives greatest influences to the wear-resistant property was reduced from 36% to about 20 to 25%, the toughness and wear-resistant property of the resulting alloy were examined. The examination of the toughness was carried out as follows: A wear-resistant steel plate on which a layer of a test alloy with a thickness of 5 mm was deposited on a SUS310S base material having a size of 9 mm in thickness $\times$ 100 mm in width $\times$ 400 mm in length was formed, and the toughness thereof was determined by using bending tests of 200R and 290R. When even one portion of the deposited metal was peeled or chipped in this bending test, this state was determined as "poor in toughness". Based upon the wear-resistant coefficient WR = 15 or less possessed by stellite No. 6 as the standard, the wear coefficient WR was required to exceed this level. Table 2 shows the alloy compositions and Table 3 shows the results of the examination.

[Table 2]

| FREA-METAL Modified Alloy (added % by weight) | | | | | | | |
|---|---|---|---|---|---|---|---|
| Alloy | C | Si | Mn | Ni | Cr | Nb | B |
| 56 | 1.3 | 4.5 | 3.5 | 3.7 | 20 | - | - |
| 57 | 1.3 | 4.5 | 3.6 | 3.7 | 20 | 0.6 | 1.0 |
| 58 | 1.3 | 4.5 | 3.6 | 3.7 | 20 | 0.6 | 2.0 |
| 69 | 1.3 | 4.5 | 3.6 | 3.7 | 20 | 8.0 | - |
| 70 | 1.3 | 4.5 | 3.6 | 3.7 | 25 | 8.0 | - |

[Table 3]

| Test Results | | | | | |
|---|---|---|---|---|---|
| Alloy | Applied base material | 200R | 290R | Hardness | Wear coefficient |
| 56 | 310S | ○ | ○ | HV309 | 78 |
| 57 | 310S | ○ | ○ | HV351 | 37 |
| 58 | 310S | ○ | ○ | HV427 | 14 |
| 69 | 310S | ○ | ○ | HV335 | 17 |
| 70 | 310S | ○ | ○ | HV362 | 15 |

In spite of a high added amount of Si, all the alloys were acceptable (○) in the bending performance, and the reason for this is presumably because, since the Cr content was small, the amount of precipitation of needle-shaped chromium carbides was small so that bending ductility was improved; in contrast, since the precipitation of carbides was small, the wear-resistant property was greatly lowered.

This test indicated that Cr, that is, chromium carbides, gives greatest influences to the toughness (bending ductility) and wear-resistant property. With respect to the wear-resistant property, two kinds of alloys No. 58 and No. 70 became narrowly acceptable. In the case of a Cr added amount of 20% (content: about 21%) of No. 58 alloy as well as in the case of a Cr added amount of 25% (content: about 25%), even upon addition of the greatest amount of Nb of 8%, the wear resistance WR exhibited the lowest value of 14 to 15 so that it was found that it was impossible to adjust the wear-resistant property by adding Nb alone.

(4) Effects of addition of B exerted on wear-resistant property and ductility of high Si-containing steel

In the case of FREA-METAL alloy (No. 55) in which, since Cr and Si contents were great, a large amount of brittle needle-shaped chromium carbides were precipitated in the matrix, peeling easily occurred in the bending process (see photograph No. 2 in Fig. 2). It is not possible to revise the characteristic that Si itself causes brittleness of steels. However, with respect to the developed alloy, although it has been found that the amount of precipitated chromium carbides greatly causes brittleness of the resulting alloy, the chromium carbides also tend to form a needle shape as the Si content successively increases, and the shape of the chromium carbides also accelerates the brittleness, and is considered to form one of main causes that exert cracks and peeling to lower the wear-resistant property.

In order to improve the bending ductility, it is important to reduce a large amount of crystallization of brittle needle-shaped chromium carbides. The wear-resistant property is lowered correspondingly as the amount of the needle-shaped carbides is reduced; therefore, by crystallizing finely miniaturized compounds having high hardness, that is, dispersed and crystallized spherical, island-shaped, network-shaped and indefinite shaped compounds, so as to compensate for the lowering, the deposited metal is prevented from becoming brittle, and this method is considered to be the best means.

To provide a means for improving the wear-resistant property without causing brittleness in high Si-containing steels, an attempt was made to improve the wear-resistant property by crystallizing a boride having extremely high hardness that gives no adverse effects to the corrosion-resistant property, or by allowing a niobium carbide that has a strong affinity with carbon and crystallizes spherical miniaturized carbides so as to coexist therewith. At the same time, it was expected that these two elements would not give adverse effects to cause brittleness, and the subsequent peeling and drops-off of the surface layer metal, which is the greatest defect of the high Si-containing steel, and would rather serve to suppress the brittleness.

In a chromium content in the deposited metal within a range from $15\% \leq Cr \leq 31\%$, the wear-resistant property can be improved by adding boron thereto; however, in the addition of boron alone, for example, the addition of 0.5% did not improve the wear-resistant property, while the addition of 4.0% caused the deposited metal to become extremely hard, resulting in many cracks developing in a right-angle direction relative to the welding bead. The addition of B alone caused a narrowed range of the amount of addition, making it very difficult to determine the degree of ductility of the deposited metal. Upon comparison in wear-resistant property between the low-B content steel and the high-B content steel, although the high-B content steel exerted a superior wear-resistant property, it also caused serious brittleness. The effects of added amount of boron exerted on the wear-resistant property and bending processability are shown in Table 4.

[Table 4]

| Effects of added amount of boron exerted on wear-resistant property and bending processability | | | | | | | | | | |
|---|---|---|---|---|---|---|---|---|---|---|
| | C | Si | Ni | Cr | Mo | Nb | B | Cu | Hardne ss | WR |
| Low-B | 1.5 | 3.5 | 3.3 | 23 | 4.6 | 4.0 | 0.5 | 4.6 | 602 | 9.2 |
| High-B | 0.5 | 3.6 | 3.3 | 24 | 4.6 | 0 | 4.0 | 4.5 | 744 | 2.0 |
| Cr: content (first layer fused metal) | | | | | | | | | | |

Moreover, the high silicon content, which is the largest characteristic of the developed alloy, serves as a very effective factor to high-temperature oxidation resistance, sulfuric acid corrosion resistance, hydrochloric acid corrosion resistance and organic acid corrosion resistance; however, normally, the addition of 3.5% or more to a normal iron-based alloy tends to cause serious brittleness to the alloy, with the result that this has not been used so much as an iron-based clad welding material, in spite of its superior performance. When the added amount of Si in a high Cr-content steel is increased, the chromium carbides are easily formed into a needle shape, with the result that the deposited metal tends to become brittle, and upon the addition of 5% of silicon alone, surface layer peeling occurred on the deposited metal, while the reduction thereof to 2.5% causes serious degradation of the wear-resistant property. Therefore, the amount of Si addition that features the developed alloy is essentially set in a range from 2.5% in the minimum to 4.5% to 5.5% in the maximum, and it was the absolute condition to eliminate brittleness within this range of the added amount.

In the same manner as in B, the addition of Si alone also caused a narrowed range of the amount of addition, making it very difficult to evaluate the ductility and wear-resistant property of the deposited metal. Therefore, the use of the product Si $\times$ B(% by weight) was required as a method for evaluating B and Si with the influences of both of them being included. Here, B crystallizes borides to cause extremely high hardness, and it is considered that the kinds, shapes and sizes of the borides and the amount of crystallized borides give influences to the ductility of the steel. In particular, in the case where the size was extremely small in comparison with the size of needle-shaped chromium carbides, it was assumed that factors that accelerate physical damages during the bending process would be greatly reduced. It was also expected that when the hardness of minute borides was extremely high, the wear-resistant property of the deposited metal would be improved.

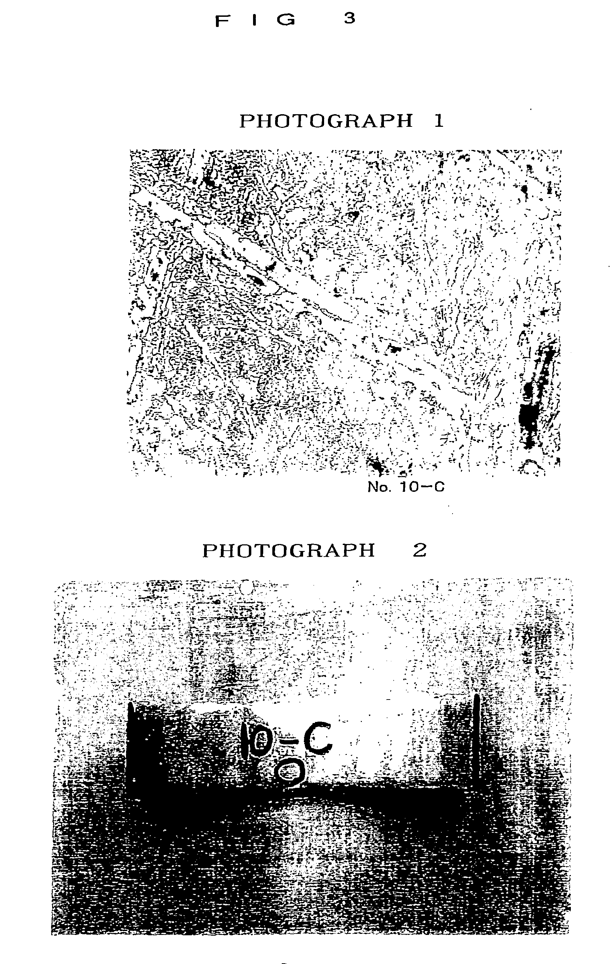

Therefore, No. 10-C alloy that exerted superior results in sulfuric acid resistance and hydrochloric acid resistance was taken up, and carbides and borides to be crystallized in the alloy were identified by using a SEM-EDX analyzer. Crystallized matters included a $Cr_7C_3$ chromium carbide (about HV2100) and three kinds of borides $Cr_2B$ (about HV1400), $Mo_2FeB_2$ (about HV2400) and NbB (about HV2250). All of these accounted for 30% of the total deposited metal. With respect to the shapes of these crystallized matters, $Cr_7C_3$ had a petal shape or a branch shape, and among borides, NbB had an indefinite shape, $Cr_2B$ had a plate shape, and $Mo_2FeB_2$ had a net-work shape (see photograph 1 in Fig. 3).

Since the carbon content of No. 10-C alloy was about 0.7% to 0.8% that was a low level, only the boride $Cr_7C_3$ was crystallized with respect to carbides, and with respect to Nb, no niobium carbides were produced. However, niobium borides (NbB) were crystallized to cause high hardness equivalent to that of the niobium carbides. Therefore, it was clarified that in the case where the carbon content was small, Nb forms borides to contribute to improve the wear-resistant property. It was clarified that because of these crystallized borides, the superior wear-resistant property was exerted even under a low carbon content.

Since, as the carbon content increases, more niobium carbides are simultaneously crystallized so that they further contribute to improve the wear-resistant property. By adding B and Nb so as to coexist, the wear-resistant property was successfully improved by their superior hardness, without causing degradation of the bending ductility. Among various kinds of boride crystallized matters, those that are assumed to cause brittleness of the alloy by their shapes include chromium boride ($Cr_2B$). Although these have a plate-shaped texture, the shapes thereof are similar to those of minute needle-shaped chromium carbides so that the brittleness might be caused (see photograph 1 in Fig. 3). In an actual bending test, No. 10-C alloy was easily bent and processed, with no surface layer peeling caused by the bending process (see photograph 2 in Fig. 3). Probably because of a difference of the amount of produced crystals from that of the needle-shaped chromium carbides, there was not so much influence given to the bending processability. With respect to the hardness of borides, reference was made to "Handbook of Metal Chemistry Thermal Processes (written by G. V. Boricenork)."

(5) Correlation between Si × B and Cr content

The correlation between the product of added amounts Si × B and Cr content can be considered as a correlation with the amount of crystallized needle-shaped chromium carbides that most greatly develop brittleness. When the Cr content is small, the amount of crystallized Cr carbides is of course reduced so that the tendency of brittleness is also reduced; however, in contrast, the wear-resistant property is greatly lowered. In the case where the amount of addition of Si alone is greatly increased, the tendency of causing brittleness to the metal becomes stronger due to the tendency of causing brittleness and the characteristic of forming chromium carbides into a needle shape inherently possessed by Si; therefore, examinations were carried out so as to find out what degree the ductility and the wear-resistant property were improved to by adding B so as to coexist, and how the appropriate alloy composition range could be subsequently expanded.

In the case of a low Cr-content, the product Si × B was set to 7.5 or more in a high level, and in the case of a high Cr-content, the product Si × B was set to 1.55 to 6.4 in a low level, so that the alloy composition range that would simultaneously satisfy the ductility and wear-resistant property of the alloy was examined. Tables 5 and 6 show the results of the examinations.

[Table 5]

| Si×B Alloy (% by weight) | | | | | | | |
|---|---|---|---|---|---|---|---|
| Alloy | C | Si | Mn | Ni | Cr | Nb | B |
| 73 | 1.5 | 4.0 | | Cu4.6 | 20 | | 3.0 |
| 74 | 1.5 | 3.5 | | Cu4.6 | 20 | | 3.0 |
| 75 | 1.5 | 2.5 | | Cu4.6 | 28 | | 3.0 |
| 76 | 1.5 | 3.1 | | Cu4.6 | 30 | | 0.5 |
| 77 | 1.5 | 4.5 | | Cu4.6 | 30 | | 0.5 |
| 78 | 1.5 | 3.2 | | Cu4.6 | 30 | | 2.0 |
| 79 | 1.5 | 4.5 | | Cu4.6 | 30 | | 1.0 |
| 80 | 1.5 | 3.5 | | Cu4.6 | 30 | | 1.0 |

[Table 6]

| Test Results | | | | | | | |
|---|---|---|---|---|---|---|---|
| Alloy | Applied base material | 200R | Cr content | SixB | Hardness | Wear coefficient | Acceptance or unsuitability |
| 73 | SS400 | ● | 15% | 12.0 | HV686 | 5.0 | Unsuitable |
| 74 | SS400 | ● | 15% | 10.5 | HV726 | 6.3 | Unsuitable |
| 75 | 304 | ○ | 26% | 7.5 | HV654 | 6.1 | Acceptable |
| 76 | 304 | ○ | 27% | 1.55 | HV450 | 67.0 | Unsuitable |

(continued)

| Test Results | | | | | | | |
|---|---|---|---|---|---|---|---|
| Alloy | Applied base material | 200R | Cr content | SixB | Hardness | Wear coefficient | Acceptance or unsuitability |
| 77 | 304 | ○ | 27% | 2.25 | HV460 | 17.0 | Unsuitable |
| 78 | 304 | ○ | 27% | 6.4 | HV603 | 12.4 | Acceptable |
| 79 | 304 | ○ | 27% | 4.5 | HV455 | 30.7 | Unsuitable |
| 80 | 304 | ○ | 27% | 3.5 | HV457 | 19.4 | Unsuitable |

In the case of the upper limit value of 7.5 of Si $\times$ B, although the wear-resistant property was ensured; however, the further addition thereof failed to ensure the bending ductility, while in the case of the lower limit value of 6.4 of Si $\times$ B, although the bending ductility was ensured, the further reduction thereof caused the wear-resistant property to be unsuitable, with the result that upper and lower width of the adjusting range became very narrow, with the upper limit value being set to 6.1 and the lower limit value being set to 12.4 with respect to the wear coefficient, failing to provide a superior wear-resistant property. The alloy composition range that would simultaneously satisfy both of superior ductility and wear-resistant property was obtained within only a limited range having a narrow width. Thus, it was difficult to obtain an alloy composition range having a wide width that would simultaneously satisfy the ductility and the wear-resistant property based upon only the correlation between the product of Si $\times$ B and Cr.

(6) Effects of added Nb

It is found that in particular, the lower limit value of Si $\times$ B provides an excellent bending ductility, but in contrast causes serious degradation of the wear-resistant property. The addition of each of B and Nb alone is not so effective; however, it is assumed that by adding these so as to coexist, the wear-resistant property at the lower limit value would be greatly improved. With this arrangement, it is considered that the alloy composition range that satisfies both of the ductility and the wear-resistant property can be greatly expanded.

Although Si $\times$ B of No. 35 alloy was 1. 8, it became possible to ensure a wear coefficient WR = 9.3 by adding Nb = 4.0% and AL = 2.0%. In the case of Si $\times$ B = 3.5 of No. 33 alloy, a wear coefficient WR = 5.9 was obtained by adding Nb = 4.0%. Since the lowest reference value of the wear coefficient WR indicating the wear-resistant property is 15, this range is sufficiently located within the reference values so that it becomes possible to greatly expand the alloy composition range that simultaneously satisfies the ductility and wear-resistant property by adding Nb and B so as to coexist.

In the product of Si $\times$ B, Nb is considered to be the third effective element to improve the wear-resistant property, and this can be selected within a very wide width of the added amount thereof, that is, a range from 0 to 8.0% including no addition, so that it is expected to easily adjust the wear-resistant property by using this. It is a known fact that Nb is an element that form carbides into a finely spherical shape, and since this has less possibility to cause brittleness of the metal and niobium carbides (about HV2400) and niobium borides (about HV2250) give high hardness, the wear-resistant property can be improved.

In the case where a gray pig iron has a needle-shaped graphite in its graphite shape, since the graphite causes brittleness in the resulting cast product, a method is proposed in which by adding Mg and Ca thereto, the graphite is formed into a spherical shape so that the ductility equivalent to that of mild steel is prepared; however, the addition of Nb exerts the same effects as those of Mg and Ca with respect to carbides. In the case where the carbon content of an alloy is set to a very low level, such as, to 0.5%, produced crystals of carbides are greatly reduced; however, by adding boron thereto so that niobium boride (NbB) and chromium boride ($Cr_2B$) are dispersed and crystallized, the wear-resistant property is subsequently improved.

In this manner, both of B and Nb form fine crystallized matters to prevent brittleness of the present developed alloy, and by exchanging brittle needle-shaped chromium carbides with both of these, it becomes possible to recover the ductility of the steel, and consequently to greatly improve the wear-resistant property by their high hardness. As has been already proved by the experiments, although the effect of the addition of Nb alone failed to provide a sufficient wear-resistant property, it was possible to improve the wear-resistant property by allowing B to be added so as to coexist therewith.

The essential conditions of the developed alloy include the product of Si $\times$ B and the addition of Nb to coexist, and lacking either one of these makes it very difficult to ensure a wide range of alloy compositions that sufficiently satisfy both of the ductility and wear-resistant property.

It is greatly beneficial that the brittleness in the high Si-containing steel, which was the biggest conventional defect of the high Si-containing steel, can be alleviated by appropriately combining three elements of Si, B and Nb, and it becomes possible to effectively utilize Si that is inexpensive and gives a superior wear-resistant property and a high-temperature oxidation resistant property to a wear-resistant material for iron-based alloys, in the future. With this arrangement, it is proposed to effectively utilize Si in place of an expensive alloy element having a rarity value, such as Co, Ni and the like, and since it is possible to provide superior corrosion-resistant property against hydrochloric acid and chlorine gas corrosions, the utilization thereof was effectively expanded so as to be applied to hydrochloric acid corrosion resistant and sulfuric acid corrosion resistant purposes in industrial wastes, high-temperature burning furnaces, thermal decomposing devices and fluidizing bed furnaces.

Assuming that a bending test is most simple and accurate as a method for evaluating brittleness of an alloy, a bending process was carried out to evaluate its ductility. The bending processability and the wear-resistant property were collectively summarized based upon the correlation between the chromium content and the product of Si × B. As a result, with respect to the tendency of the limit that causes neither peeling nor fractures in a deposited metal, even bending tests have been carried out under a fixed curvature, in the case of a low Cr content, the product of Si × B becomes a high value, while in the case of a high Cr content, the product of Si × B becomes a low value. The method for evaluating the bending processability based upon the product of Si × B makes it possible to greatly expand the evaluation range in comparison with an evaluation method by the use of B or Si alone, and consequently to determine performances more accurately.

(7) Ductility evaluation and wear resistance evaluation by bending process of wear-resistant steel plate

Supposing that the highest Si content of 4.5% is set, a large amount of needle-shaped carbides are crystallized with the chromium content of about 30% or more, from the expression of Cr ≥ -1.6Si% + 37, and since Cr becomes about 31% when Si = 4%, the range of the chromium content in the first layer deposited metal is set to "15% ≤ Cr ≤ 31%". Moreover, appropriate component ranges of the main influential elements to be used for obtaining deposited metal that has a superior bending processability, that is, superior ductility, were specified as follows:

15% ≤ Cr ≤ 31% (content in first layer deposited metal)

0.5% ≤ C ≤ 2.0% (added amount)

2.5% ≤ Si ≤ 4.5% (added amount)

0 ≤ Nb + V ≤ 8.0% (added amount)

0.5% ≤ B ≤ 3.5% (added amount)

Within these component specific ranges, an appropriate range of Si × B giving influences to the bending processability was found. The product of Si and B that would give superior bending processability without causing brittleness to the matrix was in a range of "1.25 ≤ Si × B ≤ 11.5." The schematic tendency showed that in the case of a low Cr content, the numeric value of Si × B became higher, while in the case of a high Cr-content, the numeric value of Si × B became lower. In particular, as the numeric value of Si × B became lower, the wear-resistant property tended to be lowered, and Nb was added so as to compensate for the reduced wear-resistant property.

As the numeric value of Si × B became higher and higher, the deposited metal tended to become more and more brittle, with the result that the bending processability deteriorated; therefore, in order to improve the bending processability, the numeric value of Si × B had to be set to a low level. As the numeric value of Si × B became lower, the ductility of the deposited metal was improved so that the bending processability was subsequently improved; however, in contrast, since the wear-resistant property was lowered, Nb was added within a range of 0 ≤ Nb + V ≤ 8.0% so as to adjust the wear-resistant property. In the case where the numeric value was high, that is, for example, in the range of 4.0 ≤ Si × B ≤ 11.5%, the amount of Nb addition was set within a range of 0.5 to 4%, that is, a low level; in contrast, in the case where the numeric value was low, for example, in the range of 4.0 ≥ Si × B ≥ 1.25%, the amount of Nb addition was set within a range of 4 to 8%, that is, a high level so that the wear-resistant property was improved.

The developed alloy aims at the improvement of the corrosion-resistant property, and in the case where the chromium content in the first layer deposited metal is set to 15 to 18%, that is, to a low level, carbon and chromium are combined with each other by welding heat to form a $Cr_{23}C_6$ carbide along the crystal grain interface, and this carbide is precipitated along the grain interface to cause a lack of Cr that is required for the corrosion-resistant property, resulting in a possibility of grain interface corrosion. By adding 0.5% or more of Nb thereto, Nb that has a stronger affinity to carbon than Cr is allowed to bind with carbon to exert an effect for suppressing the precipitation of $Cr_{23}C_6$.

The addition of Ti ≤ 1.0% or less also aims at the same effect as that of Nb, and since Ti exerts an extremely strong affinity with oxygen so that, determining that more losses would be generated during a high-temperature oxidizing reaction in the metal than those generated by Nb, the amount of addition was set to 1%.

A method for evaluating the bending processability of deposited metal is described as follows: A clad steel plate that was cladded with deposited metal with a thickness of 5 to 6 mm as a single cladded layer over the entire surface of each of steel plates having a size of 9 mm in mass thickness × 100 mm in width × 400 mm in length of SS400, SUS304 and SUS310S was produced, and this was subjected to a bending process by a press with the hardened metal placed on the inner side. A stellite No. 1 alloy, which was a target material, was cladded on SS400 with two layers having a thickness of 5 mm, by a gas welding process. The length of each sample piece was set to about 200 mm.

The bending curvature was set to about 200R, and the bending ductility was evaluated in the following three-degree criteria: in the case where no influences were caused on the hardened metal by the bending and an appropriate bending performance was obtained without causing any defects, this state was evaluated as ○, in the case where several surface-layer peeling and extremely slight cracks occurred on the surface of the hardened metal, this state was evaluated as ▲, and in the case where many surface-layer peeling and lamp-shaped cracks occurred to cause poor toughness, this state was evaluated as ●. The results are shown in Table 1.

In Fig. 1, Si × B is plotted on the axis of ordinates and the Cr content of the first layer deposited metal is plotted on the axis of abscissas so that the relationship between these and the ductility was indicated. A curve on the upper portion indicates a fracture limit line of surface-layer face peeling and drops-off occurred on the deposited metal during the bending process of the clad steel plate with a curvature of 200R, and the upper side from this line indicates that the bending process easily causes fractures. The lower curve indicates a limit line where the low-stress wear coefficient WR possessed by the deposited metal is maintained at 15, and the lower portion below this indicates a great reduction in the wear-resistant property with an increase in the wear coefficient.

Within an appropriate component range surrounded by the upper and lower limit lines, the bending processability of the wear-resistant steel plate composed of one cladded layer can be subjected to an R-bending process up to a radius of 200 mm with respect to the curvature, and there are many alloys capable of being subjected to a bending process with a minimum curvature lower than this. The bending processability is the same as, or superior to that of stellite No. 1, and a bending process performance that is the same as, or superior to that of a high carbon-high chromium cast iron alloy used for a wear-resistant steel plate is obtained. Alloys that can be subjected to such a minimum R bending process among high S-content steels have not been known from the past to the present.

The next important characteristic is an improved wear-resistant property at normal temperature. As has been described earlier, since the carbon content that is the most essential factor for improving the wear-resistant property is greatly reduced in comparison with that of a high-chromium cast-iron-type cladded alloy, the wear-resistant property is lowered although the bending process performance and the corrosion-resistant property are improved so that it becomes important to ensure a sufficient wear-resistant property.

A method for determining and evaluating the wear-resistant property was carried out by using an endless-belt grinder abrasion tester. The wear coefficient of each of various alloys was calculated by a ratio of the wear volume of SS400 and the wear volume of an alloy to be compared, based upon that of mild steel SS400 as a reference value.

The target wear-resistant property of the developed alloy was a wear-resistant property obtained when stellite No. 1 alloy was gas-welded, and the wear coefficient was WR = 8. The cladding method for the stellite alloy is normally carried out by a gas welding in the case of a cladding process of a small object, while in the case of a cladding process for a member having a large area, an arc welding method is used for the cladding process. The arc welding method has a higher welding efficiency in comparison with the gas welding, and its cladding technique is easier than that of the gas welding, and in recent years, welding technicians are well skilled in the arc welding; however, the greatest defect in the cladding process by the arc welding is that the melt-in depth in the base material becomes greater to cause serious degradation of the wear-resistant property.

In the case where stellite No. 1 is subjected to a cladding process by the TIG method, the wear coefficient becomes 54, and without carrying out cladding processes of two to three layers, a wear-resistant property equivalent to that of the gas method is not obtained. Moreover, the wear coefficient of high-chromium cast iron is 14 to 17.5, and since the wear coefficient of a high carbon-high chromium cast-iron-type welding rod is in a range of about 4 to 10, the wear coefficient 14 of stellite No. 6 is set as a lowest target value, with the true target value being set to WR = 8 of the gas welding of stellite No. 1. The appropriate range of the wear coefficient WR of the developed alloy is set in a range of $1 \leq WR \leq 15$.

(8) Evaluation on bending process performance and wear-resistant property of clad welding material

Evaluations on the bending process performance and wear-resistant property of a welding material is basically matched to the correlation formula of Si × B and Cr obtained in the wear-resistant steel plate. Different points of cast steel from the wear-resistant steel plate are that the dilution rate due to the base material is different and that the bending process is not particularly required. Therefore, a slightly larger amount of added alloys is permissible in comparison with the production of the wear-resistant steel plate.

With respect to the added component range in the welding material, it is necessary to correct components obtained in a clad steel plate since there are big variations depending on the clad welding methods, the kinds of base materials and melting-in depths. For example, in the case of a cladding operation of a hand welding rod, a melting-in rate of about 50% is expected, that of about 35% is expected in the MIG welding, that of about 45% is expected in the TIG welding, that of about 35% is expected in a flux cored wire, and that of 30 to 60% is expected in a submerged arc method. In general, since the welding material is easily influenced by considerably deep melting-in, a larger amount of addition is required in comparison with the amount of addition upon producing a clad steel plate. Here, it is assumed that in the case of a clad steel plate, the melting-in depth is in a range from about 25 to 35%.

A different point of the clad welding material from the clad steel plate is that the necessity of bending processes is very small. Originally, since a cladding process is carried out on the surface of an article formed into an original shape, it is not necessary to carry out a bending process. However, in the case of the clad welding, cladding processes are carried out in a manner so as to laminate layers, such as a first layer, a second layer and on the like, so that as the number of layers increases, effects from the base material dilution are reduced and the resulting components come to approximate to designed components. In general, a two-layer cladding process is often carried out, and generally, the thickness of the first layer is set to about 3 mm, and that of the second layer is set to 5 to 6 mm. In the case where layers the number of which is more than two are deposited, the amount of use of the welding material increases, and the number of cladding processes is also increased, resulting in high costs; therefore, a generally-used method carries out two-layer cladding processes.

As a result of examinations on the respective alloy components to be added to the welding material, the carbon content is set to $0.5\% \leq C \leq 2.5\%$, the chromium content is set to $15\% \leq Cr \leq 45\%$, and $0 \leq Ni \leq 13\%$, $0 \leq Mn \leq 10\%$ and $0 \leq Nb+V \leq 8\%$ are set, while Cu: 7% or less and Mo: 10% or less are set; thus, sufficient performances can be maintained within these ranges, even when subjected to melting-in effects.

Here, B, which gives great influences to the bending process performances, was set from 0.5% to 4.5%, and Si was set from 2.5% to 5.5%. In particular, the maximum added amount of Si, which gives influences to the bending process performances, could be made 1.5% less than that of Patent No. 3343576. That is, since the present developed alloy is not an alloy developed so as to be used for high-temperature applications of 600˚C or more, it is not necessary to deposit needle-shaped carbides so that it becomes possible to reduce the added amount of Si that directly relates to the precipitation of needle-shaped carbides.

By appropriately combining four elements, Cr, Si, B and Nb, it became possible to ensure a bending process performance (ductility), the target wear-resistant property and corrosion-resistant property at normal temperature in the present developed alloy.

Table 7 shows the hardness and wear-resistant property of each of various typical alloys so as to be compared with one another. Each of SS400 and SUS310S stainless steels, high chromium cast iron and sulfuric acid resistant steel plate was cut out from a base material, and each of stellite No. 1 and stellite No. 6 was cladded thereon by a two-layer gas welding method with a thickness of 5 mm, and each of GL and UF was cladded thereon by a non-gas arc method as two layers having a thickness of 5 mm.

The alloy of the wear-resistant steel plate was cladded by a submerged arc method as one layer with a thickness of about 5 mm. The base materials of cladded products were SS400, SUS304 and SUS310S stainless steels, each having a thickness of 9 mm.

[Table 7]

| Comparative table between hardness and wear-resistant property of various typical alloys | | | | |
|---|---|---|---|---|
| Material | Main chemical component % by weight material | Applied base | Hardness | Wear coefficient |
| SS400 | C - Mn - P < 0.050 S < 0.050, residual Fe | Material | HV160 | 100 |
| SUS310S | C <0.08, Cr24 to 26, Ni19 to 22, residual Fe | Material | HV184 | 85.0 |
| High-chromiu m cast iron | C < 3, Cr26 to 30, residual Fe | Material | HV544 to 700 | 14 to 17.5 |
| Sulfuric acid resistant steel plate | C0.04, Si0.1, Mn0.1, Cu0.3, residual Fe | Material | HV146 | 105 |
| Stellite No. | 1 C2.5, Cr32, Ni1.7, W12, Fe2, residual Co | Cladding material | HV838 Gas method | 8.0 |
| StelliteNo. | 6 C1.2, Cr27, Ni2.7 W4.6, Fe2.4, residual Co | Cladding material | HV659 Gas method | 14.0 |

(continued)

| Comparative table between hardness and wear-resistant property of various typical alloys | | | | |
|---|---|---|---|---|
| Material | Main chemical component % by weight material | Applied base | Hardness | Wear coefficient |
| GL | C5.3, Cr32, residual Fe | Cladding material | HV766 | 6.0 |
| UF | C5.8, Cr21, Mo6,W 2.5, V1.2, Nb6, residual Fe | Cladding material | HV970 | 2.0 |

The present invention has been devised based upon the above-mentioned findings, and the iron-based corrosion-resistant and wear-resistant clad welding material contains, all percentages by weight, C: 0.5 to 2.5%, Si: 2.5 to 5.5%, Mn: 0 to 10% or less, Cr: 15% to 45%, Ni: 0 to 13%, Cu: 7% or less, Mo: 10% or less, B: 0.5% to 4.5%, and $0 \leq$ Nb + V $\leq$ 8%, with remaining portions being composed of iron and incidental impurities.

In addition to these components, the clad welding material can include one kind or two or more kinds of Ti: 1.0% or less, Al: 3% or less, rare earth metals: 0.5% or less in total, and N: 0.2% or less.

The welding material is provided as a coated arc welding rod, a flux cored complex wire, a metallic powder or a cast rod.

Moreover, the iron-based corrosion-resistant and wear-resistant alloy of the present invention is a low carbon-high silicon-high chromium-boron-niobium-type iron-based corrosion-resistant and wear-resistant alloy that contains, all percentages by weight, C: 0.5 to 2.5% by weight, Si: 2.5 to 4.5%, Mn: 0 to 10% or less, Cr: 15% to 31%, Ni: 0 to 16%, Cu: 7% or less, Mo: 10% or less, B: 0.5% to 3.5%, and $0 \leq$ Nb + V $\leq$ 8%, and in this arrangement, within a range of 15% $\leq$ Cr < 27%, (Six $\times$ B) $\leq 2014/Cr^2 + 0.083Cr + 1.05$ is satisfied, within a range of 27% $\leq$ Cr $\leq$ 31%, 1.25% $\leq$ (Si $\times$ B) $\leq 6.0\%$ is satisfied, within a range of 15% $\leq$ Cr < 20%, (Si $\times$ B) $\geq 570/Cr^2 - 0.066Cr + 1.145$ is satisfied, and within a range of 20% $\leq$ Cr $\leq$ 31%, (Six $\times$ B) $\geq 1.25$ is satisfied.

In addition to these components, the alloy can include one kind or two or more kinds of Ti: 1.0% or less, Al: 3% or less, rare earth metals: 0.5% or less in total, and N: 0.2% or less.

This iron-based corrosion-resistant and wear-resistant alloy is more specifically a clad welding metal or cast steel that has a wear-resistant property and a corrosion-resistant property that are the same as, or superior to those of cobalt-based alloys, stellites No. 1 and No. 6 that are.

The functions of the respective elements forming the material of the present invention and the alloy of the present invention are explained below:

C: 0.5 to 2.5% (material), 0.5 to 2.0% (alloy)

In the case of 0.5% or less of the amount of C, the amount of precipitation of chromium carbides contributing to the wear-resistant property is lowered. In the case of 3% or more of the amount of C, $(Cr, Fe)_7C_3$-type carbides are precipitated as needle-shaped carbides formed into roughened grains to cause peeling and brittleness of the cladding metal, resulting in degradation of the processability. In the case of the wear-resistant steel plate, since bending processability is required, the carbon content contained in the deposited metal is preferably set to 2% or less. Determining from the iron-carbon state diagram, the content 2% or less forms a transition point where cast iron is converted to cast steel so that the cast steel becomes richer than the cast iron in its ductility. The clad welding is influenced by melting-in to the base material metal, and even when 2.5% of C is added to the alloy material, the carbon content of the first layer deposited metal is lowered to about 1.5 to 1.9% upon receipt of a base material dilution of 25 to 40%. Therefore, the amount of carbon to be added to the alloy is set to 2.5% or less even in the maximum.

Moreover, the amount of carbon contained in the deposited metal gives influences to the corrosion-resistant property, and the addition thereof in a range of 0.5% to 3.0% does not cause much influences to corrosion relating to a 10% hydrochloric acid solution; however, the addition thereof exceeding 2.0% causes an abrupt reduction in the corrosion-resistant property against corrosion caused by a 10% sulfuric acid solution. Although the amount thereof in a range from 0.5% to 1.5% does not cause any change in the corrosive weight reduction, an abrupt change occurs when the amount thereof becomes 2.0%.

In particular, with respect to a desirable amount of the carbon addition, the lower limit is preferably set to 0.5% or more, and determining from the sulfuric acid corrosion-resistant property, the upper limit is preferably set to 2.0% or less, and is more preferably set to 2.5% or less even in the maximum, when taken into consideration effects of the melting-in depths derived from various kinds of welding methods.

Si: 2.5 to 5.5 (material), 2.5% to 4.5% (alloy)

Here, Si has a function for preventing oxidation of the steel. The amount of Si addition of 2.5% or more increases an oxidation resistance, and the amount of Si addition alone of 5% or more effectively prevents oxidation in a temperature range up to 1100°C. From the viewpoint of corrosion-resistant property, Si is effective to the hydrochloric acid corrosion-resistant property and sulfuric acid corrosion-resistant property, and the real merit is exerted when it coexists with Cr, Mo and Cu.

However, a high Si-content causes brittleness of the steel, and a large amount of addition thereof makes the steel vulnerable to surface layer peeling, and, in particular, gives adverse effects to the bending processability of a wear-resistant steel plate; therefore, the minimum amount of addition was set to 2.5%. The amount less than this causes degradation of the wear-resistant property and corrosion-resistant property, and simultaneously gives adverse effects to the hydrochloric acid corrosion resistance.

Here, Si exceeding 4. 5% causes serious brittleness to the steel and the subsequent degradation of ductility of the steel, with the result that slice-shaped peeling occur on the surface layer face, with cladded portions remaining thereon. Moreover, this gives adverse effects to the bending processability so that this value is set as the upper limit value of the maximum amount of addition. Furthermore, when Si exceeds 4.5%, with the Cr content being 30% or more, a large amount of needle-shaped chromium carbides are precipitated to cause brittleness. In particular, with respect to the amount of Si addition, the lower limit is preferably set to 2.5% or more, and etermining from the sulfuric acid corrosion-resistant property, the upper limit is preferably set to 5.5% or less even in the maximum, when taken into consideration effects of the melting-in depths derived from various kinds of welding methods, and in particular, the upper limit is more preferably set to 4.5% or less.

As the Si content is increased with the Cr content being made constant, the resulting hardened metal becomes brittle in proportion thereto. Therefore, the Si content is made as low as possible within the essential range of $2.5\% \leq Si \leq 4.5\%$ so as to prevent brittleness. Since the wear-resistant property is lowered in response to the reduction of Si, the lowered wear-resistant property is recovered by adding B, Nb, V and the like thereto so as to coexist. In this case, the shapes of borides, niobium and vanadium carbides need to be formed into a spherical shape, in the same manner as in spherical graphite grains of ductile cast iron, so as to physically improve the fracture toughness of the alloy, and this arrangement forms the best means for ensuring the ductility of the high Si-containing steel.

Cr: 15% to 45% (material), 15% to 31% (alloy)

Generally speaking, Cr is very effective to suppress oxidation of the steel, and contributes to improvements of high-temperature oxidation resistant property. Here, Cr combines with carbon to deposit various kinds of chromium carbides to provide high hardness so that the wear-resistant property of the steel is improved. However, in order to improve the wear-resistant property, carbon needs to be combined with Cr to form chromium carbides, and for this reason, a large amount of carbon should be added. However, in the case of the amount of carbon addition of less than 3%, the first layer deposited metal is made to have a carbon content of about 2% when subjected to the base material dilution, with the result that a sufficient precipitation of carbides is not expected to cause degradation of the wear-resistant property; in contrast, the corrosion resistant property is improved. In order to improve the corrosion-resistant property of an iron-based alloy that is the main objective of the present invention, the precipitation of a large amount of carbides is suppressed so that the carbides are allowed to remain in the matrix.

The corrosion-resistant property is improved by increasing the amount of Cr, while the wear-resistant property is improved by adding thereto B, Nb and Si that give no adverse effects to the corrosion-resistant property, so that the amount of addition of C is suppressed to 2.5% or less. Moreover, with respect to the alloy of the present invention, one of the major objectives of the claims of the present invention is to provide ductility to the high Si-containing steel, and the Cr content gives great influences to the ductility of the high Si-containing steel. The correlation between the Cr content and the product of Si and B has been already explained in detail.

Since the clad welding process is carried out on a different kind of base metal, it is subjected to dilution from the base material metal. In the present invention, the chromium content of the first layer deposited metal obtained by receiving the base material dilution is set to 15% as the minimum value, while it is also set to 31% as the maximum value. Therefore, since different dilution rates are caused by base metals depending on various kinds of different cladding methods, the minimum rate of addition is set to 15%, and the maximum rate of addition is set to 45%.

In the case of a high Cr-content of 25% or more, brittle needle-shaped carbides tend to be precipitated depending on combinations with S, and in the case where the alloy is subjected to impact wear due to the application thereof, and calls for ductility, a low Cr-content steel in which needle-shaped carbides are hardly precipitated is selected so that, for example, a 15% chromium steel is desirably used. With respect to desirable Cr values, the lower limit is set to 15% or more, and the upper limit is set to 31% or less.

Mn: 0 to 10% (material, alloy)

Mn and Ni accelerate austenitizing to increase its stability. The austenite-forming capability of Mn is about half that of Ni. Mn has an effect for stabilizing the processability of a clad welding operation. Since the alloy of the present invention has a high Si-content as its basic composition, ferrites are contained therein, and in order to maintain the austenite texture, Mn is added thereto in place of Ni because Ni is expensive. In particular, a desirable amount of Mn addition is set from 0% to 8% or less as its upper limit.

Ni: 0 to 13% (material) 0 to 16% (alloy)

Determining from the purpose of the present invention, a high amount of Ni addition is not desirable from the viewpoint of consumption of a rarity-value alloy, and 0% is preferable. Therefore, Ni is unavoidably used only when the addition thereof is required for maintaining the wear-resistant property and bending process ductility. In the case of the Cr content from 23.5% or more to 31% or less, when the Ni content increases by 3 to 6%, the bending ductility is improved or the tendency of surface layer face peeling is reduced so that an effect for improving the Si $\times$ B value by 3 points is confirmed. The alloy of the present invention is applied to refuse burning facilities in many cases, and a high Ni-content is desirable so as to effectively improve a chlorine gas corrosion-resistant property. This is also effective for preventing carburization at high temperatures, and also has an effect for preventing peeling of a passive-state coat film of Cr in the application vulnerable to a thermal shock; therefore, a high Ni-content is desirably applied for use at high temperatures.

Basically, the alloy texture of the present invention easily forms a ferrite + austenite mixed texture, and by the use of a joined addition of Mn and Ni, the texture can be converted into an austenite texture. For example, in the case where, upon carrying out a hardened cladding process on an austenite stainless steel heavily constrained, the present device is subjected to a thermal shock due to serious temperature changes, a stress tends to appear on a welding fusion line due to a difference in linear expansion coefficients from the base material austenite stainless steel to cause a possibility of peeling when a large amount of ferrites are contained in the hardened cladding metal. In this case, by adding Ni thereto, the hardened metal can be changed into an austenite simple-substance texture so as to be adjusted to the same texture as that of the base material. For this reason, the maximum amount of Ni addition is preferably set to 13% or less. If the addition should be insufficient, Mn may be added so as to be adjusted.

Nb + V: 0% or more, 8% or less (material, alloy)

Nb has an effect for finely spherizing carbides so that a physical texture that is hardly subjected to fractures and brittleness is formed. As has been described earlier, this exerts the same effects and functions on carbide shapes as those exerted by Ca and Mg so as to spherize graphite in the same manner as in graphite shapes that give influences to the ductility of gray pig iron and ductile cast iron, as described earlier. Moreover, the greatest purpose of the addition is that the niobium carbides themselves have high hardness, that is, about HV2400. In the case of a low carbon content, for example, C = 0.7%, within a range where no NbC (niobium carbides) is crystallized, high-hardness NbB (niobium boride, Hv2250) is crystallized in place thereof so that it becomes possible to prevent degradation of the wear-resistant property.

Here, V forms fine carbides, and its forming capability is located between those of Cr and Mo, and this carbide reaction provides a tempering resistance and improvements of secondary hardening by the tempering so that the high-temperature wear resistance can be improved. Moreover, the resistance against cracks is improved by softening deformation and heat checking caused by a temperature rise.

In the case of such a high Si $\times$ B value as to cause peeling and drops-off in the deposited metal in the correlation formula of Cr content and Si $\times$ B, that is, in a limited state where no bending ductility is available, it is not necessarily required to add these elements. The addition further accelerates brittleness of the deposited metal. From the viewpoint of preventing grain interface corrosion of a 15% low-chromium content steel, the addition of at least Nb + V $\geq$ 0.5% is preferably carried out. Therefore, the amount of addition is set to 0% or more, preferably, to 0.5% or more. However, since the addition of 8% or more in the total saturates the effect thereof, and causes a possibility of causing brittleness of the cladding metal, the maximum amount of addition is set to 8% in the total.

B: 0.5% to 4.5% (material, 0.5% to 3.5% (alloy)

Some of borides to be crystallized in the alloy component range of the present invention have such shapes as not to accelerate brittleness of the alloy, and, for example, $Mo_2FeB_2$ has a network shape, NbB has an indefinite shape, and $Cr_2B$ has a plate shape. The respective micro hardnesses are HV2400, HV2250 and HV1400, which are very hard. Here, $Cr_2B$ is crystallized with a plate shape, and the resulting crystallized matters include bigger ones in comparison with needle-shaped chromium carbides; however, the number of them is small, and most of them have short lengths and are discontinuous, and although they have problems with shapes, they cause less possibility of making the matrix physically brittle as long as they are not continuously crystallized. This is proved by the fact that, even after a 200R bending process has been carried out, the resulting hardened metal is very normal without having even small pieces of peeling. In order to obtain these effects, the amount of B addition is set from 0.5% in the minimum amount of addition to 3.5% in the maximum amount of addition, and when taken into consideration effects of the melting-in depths derived from various kinds of welding methods, the maximum amount of addition is set to 4.5% or less with respect to the welding material.

Ti: 1.0% or less (material, alloy)

Titanium carbides also provide extremely high hardness; however, titanium impairs welding operability, failing to finish the bead surface flatly. Therefore, in the same manner as in Nb, the amount of addition thereof is set to 1% or less in the maximum, from the viewpoint of preventing grain interface corrosion of a 15% low-chromium content steel.

Al: 3% or less, N: 0.2%, rare earth metals, such as Ce and Y: 0.5% in the total amount of one kind or two or more kinds

The alloy of the present invention may be used for applications ranging from normal temperature to a high temperature of 600˚C or more, and needs to be provided with a high-temperature oxidation resistant property. These elements can be selectively added so as to mainly improve the oxidation resistant property at high temperatures. For example, Al improves the oxidation resistant property at high temperatures, and exerts its effects in particular in the application atmosphere including much sulfur gas. In this case, the amount of Ni is preferably made smaller, while the amount of Al is preferably made greater. When Al exceeds 3%, an alumina coat film is generated on the cladding metal, with the result that slag is easily included to impair the welding operability. In order to obtain the effects stably, the amount of addition is preferably set to 0.5% or more to 3% or less.

Mo: 10% or less (material, alloy)

Mo exerts remarkable effects to sulfuric acid corrosion resistance and hydrochloric acid corrosion resistance when added so as to coexist with Cr, Cu and Si, and the resulting corrosion-resistant property is the same as, or more than that of stellites No. 1 and No. 6. that are cobalt-based alloys. However, at present, Mo has become a very expensive alloy, and since an increase of the amount of addition causes an extreme rise of the production unit price of the alloy of the present invention, the minimum amount of addition is set to 0%, and the maximum amount of addition is set to 10%. In particular, since the amount of addition of 8% provides a sulfuric acid resistant property that exceeds the resistant property of the stellite, the further addition causes an excessive addition so that the maximum amount of addition is set to 10% or less, with the maximum amount of addition being more preferably set to 8%.

Cu: 7% or less (material, alloy)

Cu improves the sulfuric acid resistant property and hydrochloric acid resistant property. In the case where, in a refuse incinerator, a burning process is suspended, highly corrosive acid dew-point solutions, such as sulfuric acid and hydrochloric acid solutions, are generated, and with respect to these, the addition of Mo alone is not so effective, a composite addition with Cu is effectively carried out. Moreover, the composite addition miniaturizes the micro texture, thereby allowing fine needle-shaped carbides to be easily precipitated in a high Cr-content and high Si-content state so that the high-temperature wear-resistant property is improved.

With respect to the base material metal, irrespective of the kinds thereof, in particular, for example, easily weldable steels, such as mild steel, weather-resistant steel plates, sulfuric acid resistant steel, sea-water resistant steel, various stainless steels, Mn-Cr austenite steel, nickel alloy steel, chromium alloy steel and the like, may be used, and from the viewpoints of suppressing dilution and of ensuring the corrosion-resistant property and high-temperature oxidation resistant property, those containing Cr in a range of 9 to 35% and Ni in a range of 0 to 25% are preferably used.

EFFECTS OF THE INVENTION

The iron-based corrosion-resistant and wear-resistant metal is an epoch-making alloy which, although produced as an inexpensive iron-based alloy, endures sulfuric acid corrosion and hydrochloric acid corrosion as an alternative metal for expensive cobalt-based alloy and nickel-based alloy, also has a wear-resistant property that is the same as, or superior to that of these alloys, and is applicable as various welding materials, wear-resistant steel plates and cast steel.

From the world-wide viewpoint, at present, enormous amounts of expensive rarity-value alloys, such as cobalt and nickel, have been consumed as alloys for use as simply wear-resistant clad welding materials for production facilities, and worn and lost, dispersion-consumed, and discarded without being recovered in all over the world. In the future-oriented standpoint, the current wasteful consumptions of these rarity-value alloys will lead to lack of resources in the next generations sooner or later, and from now, effective utilizations of rare alloys and improvements of the resource-recovering efficiency have to be taken into consideration. Therefore, from the standpoint of effective utilizations of resources, the present inventors have proposed the utilization of silicon that has enormous amounts of deposits on the earth and is inexpensive since 26 years ago, and have continuously studied its application to clad welding materials as one of effective utilizations thereof.

At that time, an SLCE alloy having added amounts of alloy elements of C: 5.2%, Si: 12.3% and Cr: 20% (wear coefficient WR = 7, average hardness HV = 730) was developed, and a wear-resistant steel plate was produced. Many of this were supplied to copper refining factories, paper-manufacturing companies and cement companies, and were also exported to a paper-manufacturing company in Sweden. Although this alloy is strong against hydrochloric acid corrosion and sulfuric acid corrosion, and considerable evaluations were obtained; however, the alloy was poor in processability in a bending process or the like, and had a very brittle characteristic.

When Si was added to metal as an alloy, brittleness that was inherent to Si was caused, in particular, in an inexpensive iron-based alloy, making it very difficult to practically apply this as a welding material. In particular, this was characterized by the fact that innumerable cracks were caused in the thickness direction of the deposited metal. Because of its brittleness, slice-shaped peeling occur on the surface layer face of the clad welding metal and lump-shaped drops-off are generated from the base metal as the content thereof increases. Moreover, in the case of a wear-resistant steel plate, even upon applying a pressure by using a press or the like in a distortion removing process, peeling and drops-off occur, thereby limiting the application thereof to restricted usages. In the case where applied as a clad welding wire and a welding rod, even upon application of a slight impact to the cladded matter, peeling and drops-off occurred in the hardened clad welding metal.

After having studied for long years, the present inventors have given up the idea of applying Si alone, and succeeded in revising its brittleness by adding elements such as B, Nb and V so as to coexist therewith; thus, the present invention has been completed. In this method, although it is not possible to prevent Si from causing brittleness to an iron-based alloy, by using the characteristic that, when Si increases, Si forms chromium carbides in a high chromium-content steel into a needle-shape, niobium that forms niobium carbides that are miniaturized into spherical shapes or boron that allows plate-shaped borides having a net-work shape, an indefinite shape or a plate shape to be crystallized are added in order to suppress the amount of precipitation of needle-shaped carbides and also to compensate for the reduced portion; thus, the brittleness is suppressed and the wear-resistant property is improved. In particular, Nb is a very effective alloy element as an alloy that expands the adjusting range of the wear-resistant property so as to adjust the wear-resistant property.

BEST MODE FOR CARRYING OUT THE INVENTION

The following description will discuss embodiments of the present invention.

Tables 8 to 10 show compositions of deposited metals of various kinds of wear-resistant steel plates that were produced so as to obtain a correlation formula between Si $\times$ B and Cr.

[Table 8]

| Added chemical components (% by weight) to fused metals of wear-resistant steel plates | | | | | | | | |
|---|---|---|---|---|---|---|---|---|
| TP. | C | Si | Ni | Cr | Mo | Nb | B | Cu |
| 1 | 1.5 | 4.0 | 3.3 | 20.0 | 4.5 | 2.0 | 3.0 | 4.6 |
| 2 | 1.5 | 3.5 | 3.3 | 20.0 | 4.5 | 2.0 | 3.0 | 4.6 |
| 3 | 1.5 | 3.5 | 3.3 | 20.0 | 4.5 | 2.0 | 2.3 | 4.6 |
| 4 | 1.5 | 3.5 | 3.3 | 20.0 | 4.5 | 3.0 | 1.6 | 4.6 |
| 5-C | 1.5 | 2.5 | 3.3 | 13.0 | 4.5 | 4.0 | 1.0 | 4.6 |
| 6,19 | 0.7 | 2.6 | 3.3 | 25.0 | 4.7 | 0.5 | 2.5 | 4.6 |
| 7,20 | 0.7 | 2.5 | 3.3 | 27.0 | 4.6 | 3.0 | 1.7 | 4.5 |
| 8 | 2.5 | 2.6 | 3.3 | 25.0 | 4.6 | 6.0 | 1.0 | 4.6 |
| 9,22 | 1. 5 | 3.5 | 10.0 | 25.0 | 4.6 | 4.0 | 0.5 | 4.6 |
| 10 | 0.7 | 3.6 | 3.3 | 27.0 | 4.6 | 0.5 | 2.4 | 4.5 |
| 11 | 1.4 | 5.0 | 3.3 | 29.0 | 4.4 | 0.5 | 1.7 | 4.6 |
| 12 | 0.5 | 4.0 | 3.6 | 29.0 | 4.6 | 0.5 | 1.7 | 4.6 |
| 13 | 1.5 | 3.5 | 3.3 | 30.0 | 4.6 | 4.0 | 0.5 | 4.6 |
| 14 | 3.0 | 4.1 | 3.3 | 32.0 | 0 | 6.0 | 1.8 | 3.5 |
| 15 | 0.7 | 3.7 | 3.3 | 26.0 | 4.6 | 4.0 | 1.7 | 4.5 |
| 16 | 2.0 | 3.1 | 3.3 | 32.0 | 0 | 6.0 | 1.8 | 3.5 |
| 17 | 1.5 | 3.6 | 3.3 | 31.0 | 4.6 | 4.0 | 1.0 | 4.6 |
| 18 | 1.5 | 2.6 | 3.3 | 25.0 | 4.6 | 0.5 | 3.0 | 4.6 |
| 18-1 | 1.5 | 2.6 | 0 | 27.5 | 4.6 | 0.5 | 3.0 | 4.6 |
| 19-1 | 0.7 | 2.6 | 0 | 27.5 | 4.6 | 0.5 | 2.5 | 4.6 |
| 21 | 1.5 | 2.5 | 0 | 27.0 | 4.5 | 8.1 | 1.0 | 4.6 |
| 23 | 1.5 | 3.5 | 0 | 31.0 | 4.5 | 2.0 | 2.4 | 4.6 |
| 24 | 1.5 | 2.5 | 3.3 | 28.0 | 4.5 | 4.0 | 0.5 | 4.6 |
| 25 | 1.5 | 3.5 | 0 | 32.0 | 4.5 | 2.0 | 2.3 | 4.6 |

(continued)

| Added chemical components (% by weight) to fused metals of wear-resistant steel plates | | | | | | | | |
|---|---|---|---|---|---|---|---|---|
| TP. | C | Si | Ni | Cr | Mo | Nb | B | Cu |
| 26 | 2.5 | 3.1 | 3.3 | 25.0 | 0 | 6.0 | 1.5 | 3.5 |
| 27 | 1.5 | 2.5 | 3.3 | 32.0 | 4.6 | 4.0 | 1.0 | 4.6 |

[Table 9]

| 28 | 1.5 | 3.5 | 3.3 Mn8 | 24.0 | 4.6 | 6.0 | 0.5 | 4.6 |
|---|---|---|---|---|---|---|---|---|
| 29 | 1.5 | 3.5 | 3.3 | 25.0 | 8.1 | 6.0 | 0.5 | 4.6 |
| 30 | 1.5 | 3.5 | 3.3 | 25.0 | 4.6 | 6.0 | 0.5 | 6.0 |
| 31 | 2.0 | 3.5 | 0 | 29.0 | 0 | 0.5 | 2.1 | 4.6 |
| 31-1 | 2.0 | 3.5 | 0 | 31.5 | 0 | 0.5 | 2.1 | 4.6 |
| 32 | 2.0 | 3.5 | 0 | 29.0 | 0 | 2.0 | 1.6 | 4.6 |
| 32-1 | 2.0 | 3.5 | 0 | 31.5 | 0 | 2.0 | 1.6 | 4.6 |
| 33 | 2.0 | 3.5 | 0 | 29.0 | 0 | 4.0 | 1.0 | 4.6 |
| 34 | 2.0 | 3.5 | 0 | 33.0 | 0 | 2.0 | 1.6 | 3.5 |
| 35AL | 1.5 | 3.5 | AL$_2$ | 23.0 | 0 | 4.0 | 0.5 | 4.6 |
| 36 | 1.5 | 4.0 | 0 | 25.0 | 4.5 | 0.5 | 2.5 | 4.6 |
| 37 | 3.0 | 4.0 | 0 | 23.0 | 0 | 0.5 | 2.1 | 3.5 |
| 38 | 2.0 | 4.0 | 0 | 29.0 | 0 | 0.5 | 2.1 | 4.6 |
| 39 | 5.5 | 4.0 | 0 | 22.0 | 0 | 6.0 | 0 | 3.3 |
| 40 | 3.0 | 4.0 | 3.3 | 32.0 | 0 | 0.5 | 1.7 | 4.6 |
| 41 | 2.0 | 5.0 | 3.3 | 30.0 | 4.6 | 0 | 0 | 4.6 |
| 42 | 3.0 | 5.1 | 3.3 | 30.0 | 4.6 | 0 | 0 | 4.6 |
| 43 | 3.0 | 4.0 | 0 | 30.0 | 0 | 3.1 | 1.6 | 3.5 |
| 44 | 3.0 | 4.0 | 0 | 34.0 | 0 | 3.1 | 1.6 | 3.5 |
| 45 | 1.5 | 4.0 | 9 | 25.0 | 4.5 | 0.5 | 2.5 | 4.6 |
| 46 | 1.5 | 3.5 | 6 | 24.0 | 4.5 | 0.5 | 3.0 | 4.5 |
| 47 | 2.5 | 3.0 | 8 | 25.0 | 0 | 0.5 | 3.0 | 4.5 |
| 48 | 0.7 | 3.5 | 3.3 | 30.0 | 4.6 | V2.0 | 1.7 | 4.6 |
| 49 | 1.5 | 3.5 | 3.3 | 31.0 | 4.6 | V4.0 | 0.5 | 4.6 |
| 50 | 0.7 | 2.5 | 3.3 | 27.0 | 4.6 | V2.0 | 1.7 | 4.6 |
| 51 | 0.5 | 4.0 | 3.3 | 30.0 | 0 | 0 | 0 | 4.7 |
| 52 | 1.5 | 4.0 | 3.3 | 30.0 | 0 | 0 | 0 | 4.7 |
| 53 | 2.5 | 4.0 | 3.3 | 30.0 | 0 | 0 | 0 | 4.7 |
| 54 | 3.0 | 4.0 | 3.3 | 30.0 | Mn4 | 0 | 0 | 4.7 |
| 55 | 1.5 | 4.0 | 3.7 | 36.0 | Mn4 | 0 | 0 | 0 |
| 56 | 1.3 | 4.5 | 3.7 | 20.0 | Mn3.5 | 0 | 0 | 0 |
| 57 | 1.3 | 4.5 | 3.7 | 20.0 | Mn3.6 | 0.6 | 1.0 | 0 |

(continued)

| 58 | 1.3 | 4.5 | 3.7 | 20.0 | Mn3.6 | 0.5 | 2.0 | 0 |
|---|---|---|---|---|---|---|---|---|

[Table 10]

| 59 | 1.5 | 3.5 | 0 | 20.0 | 4.6 | V8.0 | 0.5 | 4.6 |
|---|---|---|---|---|---|---|---|---|
| 60 | 1.5 | 3.5 | 0 | 20.0 | 4.6 | V6.0 | 0.5 | 4.6 |
| 61 | 0.7 | 2.5 | 0 | 20.0 | 4.6 | V6.0 | 1.7 | 4.6 |
| 62 | 2.0 | 2.6 | 3.3 | 25.0 | 4.6 | 6.0 | 1.0 | 4.6 |
| 63 | 2.0 | 4.0 | 3.3 | 31.0 | 0 | 6.0 | 1.8 | 4.6 |
| 64 | 2.0 | 3.2 | 3.3 | 25.0 | 0 | 6.0 | 1.5 | 3.5 |
| 65 | 2.0 | 4.1 | 0 | 24.0 | 0 | 0.5 | 2.1 | 3.5 |
| 66 | 1.5 | 2.5 | 3.3 | 13.0 | 4.5 | 4.0 | 3.5 | 4.6 |
| 67 | 1.5 | 2.5 | 3.3 | 18.0 | 4.5 | 0.5 | 3.5 | 4.6 |
| 68 | 1.5 | 2.5 | 3.3 | 20.0 | 4.5 | 0.5 | 3.0 | 4.6 |
| 69 | 1.3 | 4.5 | 3.7 | 20.0 | Mn3.6 | 8.0 | 0 | 0 |
| 70 | 1.3 | 4.5 | 3.7 | 25.0 | Mn3.6 | 8.0 | 0 | 0 |
| 71 | 2.0 | 4.1 | 3.3 | 30.0 | 0 | 0 | 0 | 4.7 |
| 72 | 1.5 | 2.5 | 3.3 | 26.0 | 4.5 | 0.5 | 2.7 | 4.6 |

The bending processability of each of these wear-resistant steel plates was examined. The content of Cr contained in the first layer deposited metal was calculated with a base-material dilution ratio being set to 25%. As described earlier, the evaluation of the bending processability of the deposited metal was carried out by using the following method in which a clad steel plate that was cladded with deposited metal with a thickness of 5 to 6 mm with a single cladded layer over the entire surface of each of steel plates having a size of 9 mm in mass thickness $\times$ 100 mm in width $\times$ 400 mm in length of SS400, SUS400, SUS304 and SUS310S was produced, and this was subj ected to a bending process by a press with the hardened metal placed on the inner side. A stellite No. 1 alloy, which was a target material, was cladded on SS400 with two layers having a thickness of 5 mm, by a gas welding process. The length of each sample piece was set to about 200 mm.

The bending curvature was set to about 200R, and the flextural ductility was evaluated in the following three-degree criteria: in the case where no influences were caused on the hardened metal by the bending and an appropriate bending performance was obtained without causing any defects, this state was evaluated as O, in the case where several surface-layer peeling and extremely slight cracks occurred on the surface of the hardened metal, this state was evaluated as ▲, and in the case where many surface-layer peeling and lamp-shaped cracks occurred to cause poor toughness, this state was evaluated as ●. The results are shown in the following Tables.

[Table 11]

| Influences of Si×B to bending processability of wear-resistant steel plate | | | | | | | | | |
|---|---|---|---|---|---|---|---|---|---|
| Amount of Cr contained in the first-layer fused metal (not the amount of addition, with a base material dilution ratio being set to 25%) | | | | | | | | | |
| TP | C | Si | Cr | Nb | Si×B round off to the nearest whole number | Bending ductility | Base material | Hardness HV | WR |
| 1 | 1.5 | 4.0 | 15.0 | 2.0 | 12 | ● | SS | 806 | 2.2 |
| 2 | 1.5 | 3.5 | 15.0 | 2.0 | 10.5 | ○ | SS | 758 | 4.0 |
| 3 | 1.5 | 3.5 | 15.0 | 2.0 | 8.1 | ○ | SS | 746 | 9.6 |
| 4 | 1.5 | 3.5 | 15.0 | 3.0 | 5.6 | ○ | SS | 618 | 9.1 |
| 5-C | 1.5 | 2.5 | 16.0 | 4.0 | 2.5 | ○ | 310 | 360 | 15.0 |
| 6 | 0.7 | 2.6 | 19.0 | 0.5 | 6.5 | ○ | SS | 615 | 5.6 |
|  |  |  |  |  |  |  |  |  |  |
| 7 | 0.7 | 2.5 | 20.0 | 3.0 | 4.3 | ○ | SS | 533 | 11.0 |
| 8 | 2.5 | 2.6 | 19.0 | 6.0 | 2.6 | ○ | SS | 680 | 4.0 |
| 9 | 1.5 | 3.5 | 19.0 | 4.0 | 1.8 | ○ | SS | 404 | 11.0 |
| 10 10-C | 0.7 | 3.6 | 20.0 27.0 | 0.5 | 8.6 | ● ○ | SS 310 | 655 595 | 3.3 4.1 |
| 11 | 1.4 | 5.0 | 22.0 | 0.5 | 8.5 | ● | SS | 818 | 2.0 |
| 12 | 0.5 | 4.0 | 22.0 | 0.5 | 7.0 | ○ | SS | 563 | 7.4 |
| 13 | 1.5 | 3.5 | 23.0 | 4.0 | 1.8 | ○ | SS | 744 | 9.0 |
| 14 14-C | 3.0 | 4.1 | 24.0 30.0 | 6.0 | 7.4 | ● ● | SS 310 | 712 747 | 2.0 2.3 |
| 15 | 0.7 | 3.7 | 24.0 | 4.0 | 6.3 | ● | 304 | 662 | 5.0 |

[Table 12]

| 16 16-C | 2.0 | 3.1 | 24.0 30.0 | 6.0 | 5.6 | ○ ▲ | SS 310 | 624 622 | 4.0 4.8 |
|---|---|---|---|---|---|---|---|---|---|
| 17 17-C | 1.5 | 3.6 | 23.0 30.0 | 4.0 | 3.6 | ▲ ○ | SS 310 | 780 | 3.3 |
| 18 | 1.5 | 2.6 | 25.0 | 0.5 | 7.8 | ○ | 310 | 482 | 4.5 |
| 18-1 | 1.5 | 2.6 | 25.0 | 0.5 | 7.8 | ● | 304 | - | - |
| 19 | 0.7 | 2.6 | 25.0 | 0.5 | 6.5 | ○ | 310 | 501 | 4.1 |
| 19-1 | 0.7 | 2.6 | 25.0 | 0.5 | 6.5 | ▲ | 304 | - | 5.6 |
| 20 | 0.7 | 2.5 | 25.0 | 3.0 | 4.3 | ○ | 310 | 405 | 12.6 |
| 21 | 1.5 | 2.5 | 25.0 | 8.1 | 2.5 | ○ | 304 | 547 | 11.0 |
|  |  |  |  |  |  |  |  |  |  |
| 22 | 1.5 | 3.5 | 25.0 | 4.0 | 1.8 | ○ | 310 | 358 | 11.3 |

(continued)

| | | | | | | | | | |
|---|---|---|---|---|---|---|---|---|---|
| 23 | 1.5 | 3.5 | 30.0 | 2.0 | 8.4 | ○ | 310 | 658 | 3.6 |
| 24 | 1.5 | 2.5 | 27.0 | 4.0 | 1.3 | ○ | 310 | 402 | 14.0 |
| 25 | 1.5 | 3.5 | 30.0 | 2.0 | 8.1 | ▲ | 310 | 665 | 6.3 |
| 26 | 2.5 | 3.1 | 23.0 | 6.0 | 4.7 | ○ | 304 | 666 | 3.9 |
| 27 | 1.5 | 2.5 | 30.0 | 4.0 | 2.5 | ○ | 310 | 596 | 8.7 |
| 28 | 1.5 | 3.5 | 23.0 | 6.0 | 1.8 | ○ | 304 | 483 | 8.0 |
| 29 | 1.5 | 3.5 | 23.0 | 6.0 | 1.8 | ○ | 304 | 621 | 9.3 |
| 30 | 1.5 | 3.5 | 23.0 | 6.0 | 1.8 | ○ | 304 | 512 | 10.0 |

[Table 13]

| TP No | C | Si | Cr | Nb | Si×B | Bending ductility | material | Hardness | WR |
|---|---|---|---|---|---|---|---|---|---|
| 31 | 2.0 | 3.5 | 28.0 | 0.5 | 7.4 | ○ | 310 | 587 | 4.9 |
| 31-1 | 2.0 | 3.5 | 28.0 | 0.5 | 7.4 | ● | 304 | - | - |
| 32 | 2.0 | 3.5 | 28.0 | 2.0 | 5.6 | ○ | 310 | 551 | 3.8 |
| 32-1 | 2.0 | 3.5 | 28.0 | 2.0 | 5.6 | ○ | 304 | - | - |
| 33 | 2.0 | 3.5 | 28.0 | 4.0 | 3.5 | ○ | 310 | 504 | 5.9 |
| 34 | 2.0 | 3.5 | 31.0 | 2.0 | 5.6 | ○ | 310 | 560 | 5.3 |
| 35 | 1.5 AL2.0 | 3.5 | 22.0 | 4.0 | 1.8 | ○ | 304 | 528 | 9.3 |
| | | | | | | | | | |
| 36 | 1.5 | 4.0 | 19 | 0.5 | 10.0 | ● | SS | 696 | 4.0 |
| 37 | 3.0 | 4.0 | 24 | 0.5 | 8.4 | ○ | 310 | 558 | 5.3 |
| 38 | 2.0 | 4.0 | 28 | 0.5 | 8.4 | ○ | 310 | 699 | 2.8 |
| ⊙39 | 5.4 | 4.0 | 16.0 | 6.4 | 0 | ● | SS | 852 | 2.0 |
| | Base material 310 for use in corrosion test Cr = 23%, SS: bending test | | | | | | 310 | 862 | 2.7 |
| 40 | 3.0 | 4.0 | 24.0 | 0.5 | 6.8 | ● | SS | 814 | 2.4 |
| 41 | 2.0 | 5.0 | 23.0 | 0 | 0 | ▲ | SS | 616 | 6.3 |
| 42 | 3.0 | 5.0 | 23.0 | 0 | 0 | ● | SS | 679 | 2.5 |
| 43 | 3.0 | 4.0 | 27.0 | 3.0 | 6.0 | ● | 304 | 706 | 3.0 |
| 44 | 3.0 | 4.0 | 30.0 | 3.0 | 6.0 | ● | 304 | 739 | 3.0 |

[Table 14]

| | | | | | | | | | |
|---|---|---|---|---|---|---|---|---|---|
| 45 | 1.5 | 4.0 | 19.0 | 0.5 | 10.0 | ● | SS | 713 | 1.8 |
| 46 | 1.5 | 3.5 | 22.0 | 0.5 | 10.5 | ● | 304 | 608 | 6.7 |
| 47 | 2.5 | 3.0 | 23.0 | 0.5 | 9.0 | ● | 304 | 622 | 2.8 |
| 48 | 0.7 | 3.5 | 23.0 | V2.0 | 6.0 | ▲ | SS | 488 | 16.0 |
| 49 | 1.5 | 3.5 | 24.0 | V4.0 | 1.8 | ○ | SS | 569 | 19.0 |
| 50 | 0.7 | 2.5 | 20.0 | V2.0 | 4.3 | ○ | SS | 589 | 7.4 |

(continued)

| | | | | | | | | | |
|----|-----|-----|------|------|-----|---|-----|-----|------|
| 51 | 0.5 | 4.0 | 27.0 | 0 | 0 | ○ | 304 | 362 | 99.0 |
| 52 | 1.5 | 4.0 | 27.0 | 0 | 0 | ○ | 304 | 385 | 31.0 |
| 53 | 2.5 | 4.0 | 27.0 | 0 | 0 | ○ | 304 | 563 | 5.8 |
| | | | | | | | | | |
| 54 | 3.0 | 4.0 | 27.0 | 0 | 0 | ○ | 304 | 597 | 4.1 |
| 55 | 1.5 | 4.0 | 36.0 | 0 | 0 | ● | 310 | 977 | 4.2 |
| 56 | 1.3 | 4.5 | 20.0 | 0 | 0 | ○ | 310 | 309 | 77.8 |
| 57 | 1.3 | 4.5 | 20.0 | 0.6 | 4.5 | ○ | 310 | 351 | 37.3 |
| 58 | 1.3 | 4.5 | 20.0 | 0.6 | 9.0 | ○ | 310 | 427 | 13.5 |
| 59 | 1.5 | 3.5 | 20.0 | V8.0 | 1.8 | ○ | 310 | 479 | 18.7 |
| 60 | 1.5 | 3.5 | 20.0 | V6.0 | 1.8 | ○ | 310 | 415 | 22.4 |
| 61 | 0.7 | 2.5 | 20.0 | V6.0 | 4.3 | ○ | 310 | 368 | 14.6 |
| 62 | 2.0 | 2.6 | 19.0 | 6.0 | 2.6 | ○ | SS | 624 | 6.5 |

Table. 15

| | | | | | | | | | |
|------|-----|-----|------|-----|-----|---|-----|-----|------|
| 63 | 2.0 | 4.0 | 24.0 | 6.0 | 7.2 | ● | SS | 640 | 3.3 |
| 63-1 | 2.0 | 4.0 | 30.0 | 6.0 | 7.2 | ● | 310 | 649 | 3.6 |
| 64 | 2.0 | 3.2 | 23.0 | 6.0 | 4.8 | ○ | 304 | 511 | 12.3 |
| 65 | 2.0 | 4.1 | 24.0 | 0.5 | 8.6 | ○ | 310 | 506 | 8.8 |
| 66 | 1.5 | 2.5 | 16.0 | 4.0 | 8.8 | ○ | 310 | 583 | 2.4 |
| 67 | 1.5 | 2.5 | 18.0 | 0.5 | 8.8 | ○ | 304 | 618 | 4.0 |
| 68 | 1.5 | 2.5 | 19.5 | 0.5 | 7.6 | ○ | 304 | 627 | 4.8 |
| 69 | 1.3 | 4.5 | 21.0 | 8.0 | 0 | ○ | 310 | 335 | 17.3 |
| 70 | 1.3 | 4.5 | 25.0 | 8.0 | 0 | ○ | 310 | 362 | 15.0 |
| | | | | | | | | | |
| 71 | 2.0 | 4.1 | 27.0 | 0 | 0 | ○ | 304 | 407 | 35.6 |
| 72 | 1.5 | 2.5 | 19.5 | 0.5 | 6.8 | ○ | 304 | 716 | 6.1 |

(1) Correlation between Si × B and Cr

These results are arranged and shown in Fig. 1. In spite of the fact that the amount of carbon addition was extremely reduced to 0.5 to 2.0% within an appropriate range in the correlation graph relating to the product of Si × B and Cr content, each of alloys of No.2, No. 6, No. 10-C, No. 15, No. 16, 16-C, No. 23, No. 26, No. 32, No. 32-1, No. 33, No. 34, No. 38, No. 66, No. 67, No. 68 and No. 72 had a wear coefficient in a range of 3 to 6, which indicated that there were many alloys that could ensure a wear-resistant property that was about two times or more higher than that of stellite No. 1 and No. 6.

It is an epoch-making discovery that an wear-resistant property that is higher than that of high carbon-high chromium cast-iron-type cladding alloy GL (WR=6), and at present, an iron-based high-temperature wear-resistant clad welding alloy UR (WR = 2) has been recognized in the world as an alloy having the highest wear-resistant property; however, alloys N. 6 and No. 38 ensure a wear-resistant property as high as the wear-resistant property thereof.

In a tendency of the upper limit curve, within the content of Cr between about 15% to about 27%, the numeric value of Si × B dropped from about 11.5 to 6, and the numeric value was saturated at about 6, between Cr = 27% or more and Cr = 31%. When Si × B exceeds this limit value, the bending performance is extremely lowered to cause peeling and drops-off in the deposited metal itself, resulting in serious degradation in the ductility.

As the numeric value of Si × B became higher, the wear resistance was improved, and in contrast, as the numeric value of Si × B became lower, the bending performance became better, while the wear resistance was lowered greatly. In order to improve the wear resistance, Nb was added thereto.

(2) Effects of Addition of Nb

With respect to No. 6 alloy having a Cr content of 19%, a wear coefficient of WR = 5.6 was obtained with Si × B = 6.5 and an amount of Nb addition of 0.5%, and with respect to No. 62 alloy with the same Cr content, a wear coefficient of WR = 6.5 was obtained with Si × B = 2.6 and an amount of Nb addition of 6.0%; thus, virtually the same wear resistance was obtained. In the case where Si × B became a low value of 2.6, the wear coefficient was lowered to about 9 to 15; however, upon addition of 6% of Nb, the wear coefficient could be recovered up to 6.5.

Thus, Nb exerted capability of positively improving the wear resistance. In the case where the numeric value of Si × B was set within 1.25 to 4.5, the wear coefficient WR tended to be lowered to 8 to 15, that is, a seriously poor level, regardless of the Cr content; however, in contrast, the bending performance was improved. In order to improve the wear resistance within this range, the improvement can be obtained by increasing or reducing the amount of Nb addition within a range of 4 to 8%. In the case where the numeric value of Si × B became 4.5 or more to 11.5 or less, by adjusting the amount of Nb addition within 0.5 to 4%, the wear resistance was improved without lowering the bending ductility, and in the case where the numeric value of Si × B became 4.5 or less, by selecting the amount thereof within a range from 4 to 8%, the wear resistance was improved without lowering the bending ductility.

The bending ductility of No. 10 is ●; however, since the product of Si × B is as high as 8.6, the bending ductility can be changed to ○, by reducing this to about 7. With respect to No. 17 alloy as well, by reducing the amount of Nb addition from 4% to 1 to 2%, the bending ductility can be changed from ▲ to ○. It is found that by adjusting the amount of Nb addition, as well as by adjusting Si × B, within a range surrounded by the upper and lower limit curves, good bending ductility and superior wear resistance can be obtained.

(2) Effects of V serving as a substitution element for Nb

Normally, it has been said that V and Nb exhibit the same effects as spherical carbide-forming elements; therefore, the effects of V are examined. In order to examine a difference of effects given by Nb and V to the wear resistance, a group of Nb alloys and a group of V alloys are compared with each other. The group of Nb-added alloys are shown in Table 16, while the group of V-added alloys are shown in Table 17.

[Table 16]

| Nb-added alloy (Cr: content in the first layer) | | | | | | | | | |
|---|---|---|---|---|---|---|---|---|---|
| Alloy | C | Si | Cr | Nb | Si×B | Bending ductility | Base material | Hardness | WR |
| 7 | 0.7 | 2.5 | 20 | 3 | 4.3 | ○ | SS | 533 | 11.0 |
| 9 | 1.5 | 3.5 | 19 | 4 | 1.8 | ○ | SS | 404 | 11.0 |
| 20 | 0.7 | 2.5 | 2.5 | 3 | 4.3 | ○ | 310 | 405 | 12.6 |
| 29 | 1.5 | 3.5 | 23 | 6 | 1.8 | ○ | 304 | 621 | 9.3 |

[Table 17]

| V-added alloy (Cr: content in the first layer) | | | | | | | | | |
|---|---|---|---|---|---|---|---|---|---|
| Alloy | C | Si | Cr | V | Si×B | Bending ductility | Base material | Hardness | WR |
| 48 | 0.7 | 3.5 | 23 | 2 | 6.0 | ▲ | SS | 488 | 16.0 |
| 49 | 1.5 | 3.5 | 24 | 4 | 1.8 | ○ | SS | 589 | 19.0 |
| 50 | 0.7 | 2.5 | 20 | 2 | 4.3 | ○ | SS | 589 | 7.4 |
| 59 | 1.5 | 3.5 | 20 | 8 | 1.8 | ○ | 310 | 479 | 19.0 |
| 60 | 1.5 | 3.5 | 20 | 6 | 1.8 | ○ | 310 | 415 | 22.0 |
| 61 | 0.7 | 2.5 | 20 | 6 | 4.3 | ○ | 310 | 368 | 15.0 |

When Nb alloy No. 7 and V alloy No. 50 were compared with each other, the base material of SS400 was used in both of the alloys, and Si × B = 4.3, with the same amounts of addition of C, Cr and Si being used, and Nb = 3% and V = 2%. The wear coefficient WR was 11.0 for the Nb alloy, and 7.4 for the V alloy so that the V-added alloy was superior in wear resistance to a certain degree.

When Nb alloy No. 9 and V alloy No. 49 were compared with each other. The amounts of the added alloys were all the same, and the same base material of SS400 was used. When the same amount of addition was used, that is, Nb = 4% and V = 4%, and the former had a wear coefficient WR = 11.0 and the latter had a wear coefficient WR = 19.0; thus, there was a difference between the two values.

In the case of Si × B = 4.3, V made it possible to improve the wear resistance better than Nb in spite of the fact that the amount of V addition was somewhat smaller than that of Nb. In the case of Si × B = 1.8, Nb made it possible to improve the wear resistance overwhelmingly when the amounts of addition were the same.

Based upon the comparison tests, it is found that in the case of Si × B = 1.8 that is a low level, the addition of Nb is more effective, while in the case of Si × B = 4.3 that is a high level, the addition of V is more effective to improve the wear resistance even when the amount of V addition is smaller than the amount of Nb addition. That is, V contributes to improve the wear resistance in the same manner as in Nb. With respect to the bending ductility also, the amount of V addition was limited to a maximum level of 8% in the same manner as in Nb. Moreover, Nb and V may be added so as to coexist, and the total amount of additions of the two materials is preferably set to 8% or less.

(3) Effects of kinds of base materials given to wear resistance

In the case where the content of Cr was in a range from 25% or more to 31% or less, more of SUS310S base material was used; however, in the case of 25% or less, since base materials of mild steel and 304 stainless steel were commonly used and subjected to a cladding process, it was feared that the differences in the base materials might cause variations in the wear resistance. The reason for this is because, with respect to the numeric values of wear coefficients WR indicating wear resistance, the numeric values obtained between the stainless steel base material and the mild steel base material were compared with each other in a mixed manner. Although originally, the test should be carried out by using the same base material, it cannot help but to use this method because, since the content of chromium in the deposited metal needs to be varied from 15% to 31%, the adjustment of the content of chromium in the deposited metal is carried out by utilizing the melting-in of the base material.

Table 18 shows effects of kinds of base materials that are given to wear resistance. Here, No. 6 alloy and No. 19 alloy had the same amounts of added components, and the kind of the base material of the former was SS400 and that of the latter was SUS310S. In the same manner, with respect to No. 7 alloy and No. 20 alloy, that of the former was SS400, and that of the latter was SUS310S. With respect to No. 9 alloy and No. 22 alloy, that of former was SS400, and that of the latter was 310S.

[Table 18]

| Effects of differences of base materials given to wear resistance | | | |
|---|---|---|---|
| Kind of alloy | Kind of base material | Hardness | Wear resistance WR |
| No. 6 | SS400 | HV615 | 5.6 |
| No. 19 | SUS310S | HV501 | 4.1 |
| No. 7 | SS400 | HV533 | 11.0 |
| No. 20 | SUS310S | HV405 | 12.6 |
| No. 9 | SS400 | HV404 | 11.0 |
| No. 22 | SUS310S | HV358 | 11.3 |

The factor that was influenced by the differences of the base materials was the hardness value, and hardly any influences were given to the wear resistance. Since these differences in wear coefficient were included within the scope of claims, no problems were raised. Therefore, it is determined that the wear coefficients of SS400 and SUS310S may be regarded as the same.

(4) Relationship between Ni content and bending ductility

Table 19 shows the relationship between Ni content and bending processability of deposited metal.

[Table 19]

| Relationship between nickel content of disposed metal and bending processability | | | | | |
|---|---|---|---|---|---|
| Alloy number | Ni added amount | Base material | Ni content of disposed metal | Difference in average value | Bending ductility |
| No. 18 | 3.3% | 310 | 7.5%            to 8.3% | 5.7 | ○ |
| No. 18-1 | 0.0% | 304 | 2.0%            to 2.4% | | ▲ |
| No. 19 | 3.3% | 310 | 7.5%            to 8.3% | 5.7% | ○ |
| No.19-1 | 0.0% | 304 | 2.0%            to 2.4% | | ▲ |
| No. 31 | 0.0% | 310 | 5.0%            to 6.0% | 3.3% | ○ |
| No. 31-1 | 0.0% | 304 | 2.0%            to 2.4% | | ● |

In the case of Cr content from 23 to 24%, stainless steel base materials SS400 and SUS304 were used, and in the case of Cr content of 25% or more, stainless steel SUS310S was used. In the case of using SS400 mild steel base material, the range of the Ni content is set about 0.0 to 10%, in the case of using SUS304 base material, it is set about 2.0 to 12%, and in the case of SUS310 base material, it is set about 5.0 to 16%.

In the case of Cr content from 23.5% or more to 31% or less, when the Ni content is increased by about 3 to 6%, the bending ductility tends to be improved by about 3 points in the Si × B value; however, alloys causing cracks also exist in a mixed manner, and in a range surrounded by this area, combinations of various elements should be examined carefully, and alloy structures should be made carefully. In the case of Cr content of 23.5% or less, the deposited metal causes fractures even when the Ni content becomes 7 to 8%, failing to obtain a fracture-preventive effect by the Ni addition.

(5) Correlation formula between Si × B and Cr content

1) Upper limit curve under which peeling and drops-off of hardened metal are caused

$$15\% \leq Cr \leq 27\%$$

$$Si \times B \leq 2014/Cr^2 + 0.083Cr + 1.05 \quad (1)$$

$$27\% \leq Cr \leq 31\%$$

$$1.25\% \leq Si \times B \leq 6.0\% \quad (2)$$

2) Lower limit curve that can keep the wear resistance WR of hardened metal at the lowest value of 15

$$15\% \leq Cr \leq 20.0\%$$

$$Si \times B = 570/Cr^2 - 0.066Cr + 1.145 \quad (3)$$

$$20\% \leq Cr \leq 31\%$$

$$Si \times B \geq 1.25 \quad (4)$$

3) In the case where the Ni content of the deposited metal is increased by 3 to 6%, with respect to the upper limit curve relating to peeling and drops-off, formula (1) is parallel-shifted upward by a portion corresponding to Si × B = 3 points, in the range from 23.5% ≤ Cr ≤ 31% so that the range that hardly causes cracks is expanded.

(6) Evaluation of corrosion-resistant property of clad welding material
As described earlier, the corrosion-resistant property of the alloy of the present invention has been developed for achieving that of Worthite alloy as its target.
The chemical components thereof are explained as follows: C < 0.07%, Cr20%, Ni25%, Si3.5%, Mo3.0%, Cu2.0%
In addition to these, DIN8556, E20. 25. 5LCuR26 may be used as welding materials. The typical chemical components are explained as follows: C0.025%, Mn2%, Si0.4%, Cr21%, Ni25%, Mo5%, Cu1.8%, Nb0.1%, N0.08%
Both of the alloys, which have a high Ni content and are structural materials having a corrosion-resistant property, are not used as wear-resistant metals. The latter is a welding material; however, since it has a low Si content, that is, Si=0.4%, with an extremely low carbon content, it cannot be used as a wear-resistant metal. Therefore, the present inventors have set a carbon content required for the wear-resistant metal in a range of 0.5% or more to 2.0% or less. Moreover, since the development of a Si-containing alloy is a main objective of the present developed alloy, the Si content is set in a range of 2.5% ≤ Si ≤ 5.5%. Moreover, in order to improve the wear-resistant property, Nb and V, which are carbide-forming elements, are added thereto, and B, which forms a boride that gives high hardness, is also added so as to co-exist.
An alloy-designing process was carried out so as to modify two kinds of corrosion-resistant alloys into a wear-resistant alloy, and also so as not to impair corrosion-resistant properties that the two kinds of the alloys originally had. Since DIN8556 welding rods are cladded on mild steel and low alloy steel and used as joining materials and corrosion-resistant materials for plants in phosphate, sulfate, acetate, salt and sea water environments; however, these are not wear-resistant materials, and used for a cladding operation on mechanical structural members.
Alloys, which have a corrosion-resistant property that is superior to that of stellite No. 1 and stellite No.6 alloys in the range of the graph capable of ensuring proper bending ductility and abrasion-resistant property, are invented. Comparison tests for corrosion-resistant property were carried out on these alloys. In the corrosion tests, the amount of corrosive reduction of each of these, when immersed into each of a 10% sulfuric acid aqueous solution, a 5% ferrous chloride aqueous solution, a 10% hydrochloric acid aqueous solution and a 48% caustic soda aqueous solution for 480 hours continuously, was measured, and based upon the resulting differences, the superiority and inferiority of the corrosion-resistant property were compared.
With respect to SS400 mild steel, SUS310S and SUS304 stainless steels, high-chromium cast iron, and sulfuric acid resistant steel, cut pieces were obtained from a plate member of each of these so that test pieces were prepared. All the other materials were cladding materials, and cladded on SUS310S steel with a thickness of 5 mm so that test pieces were prepared. The cladding test pieces were subjected to a corrosive reduction including the base material SUS310S, and using the hardened metal obtained by sampling the hardened metal itself for the corrosion test made it impossible to compare the samples with each other because many cracks occurred in some of alloys; therefore, on the assumption of an actual machine plant, a corrosion test including the base material was carried out.
The size of the test piece was set to 50 × 50 mm, with its thickness being set to 9 mm. The thickness of the hardened metal was about 5 mm, and the base material face was ground based upon the hardened metal face so that a thickness of 9 mm was maintained. The entire surface area of the test piece was 68 cm². The corrosive reduction per unit area was supposed to be indicated; however, since a different kind of metal SUS310S was included in the base metals, the total corrosive reduction measured values, as they are, are displayed so as to be compared.
The reason that SUS310S is selected as one of the base metals is because a large amount of chromium can be transferred to the deposited metal as a melting-in portion from the base metal. With this arrangement, the amount of addition of Cr to the deposited metal can be easily adjusted. The amount of chromium content in SUS304 is as small as 18%, and the amount of chromium content in SUS310S is 25% so that this allows a large amount of chromium to be obtained from the base material metal. Moreover, SUS310S is also superior in corrosion-resistant property. By the effect of the melting-in portion, the Cr content of the single cladded-layer deposited metal becomes the same as, or higher than the added component, with Cr being picked up from the SUS310S base material metal. The melting-in rate of the base material was set to 25%.
In the correlation drawing between Si × B and Cr content in the first layer deposited metal, alloys, located in the surrounded area, were properly selected, and corrosion tests were carried out thereon. Those alloys that were subjected to the corrosion tests were surrounded by ○ so as to be easily recognized. Upon using in a high temperature range of 800˚C, heat resistant stainless steel base materials, such as SUS310 and SUS310S, are selected, and plate members to be used as heat resistant materials used from the proximity of room temperature to 800˚C, stainless steels, such as SUS304 and SUS316, are mainly used. Therefore, etermining from the amount of addition of chromium, the Cr content of the first layer deposited metal is assumed to be in a range from about 23 to 30%. In the case where the Cr content less than this level, mild steel or esten steel is selected as the base material and the chromium content tends to be lowered in most cases. In the case where the corrosion-resistant property is required, at least stainless steel is adopted as the base material metal, and steels, such as 304, 316 and 316L, are mainly used. Therefore, the corrosion tests were carried out mainly centered on the Cr content in a range of about 23 to 30%; however, 16% chromium steel was also examined since examinations on low-chromium steels were partially required.

The values close to the upper limit value of the amount of addition of each of alloy components, such as Ni, Mn, Mo and Cu, were selected in the alloys of the present invention, that is, No. 5 alloy was selected in the case of a low Cr content of 16%, Nos. 10 and 17 alloys were selected in the case of Cr contents of 27% and 30% with valuable Mo contained therein, Nos. 16, 14 and 39 alloys were selected in the case of varying Cr contents of 2%, 3% and 5.4% with no Mo contained therein, No. 22 alloy was selected in the case of a 10% Ni content, No. 28 alloy was selected in the case of a 8% Mn content, No. 29 alloy was selected in the case of a 8% Mo content, and No. 30 alloy was selected in the case of a 6% Cu content, and differences in corrosion were examined. The results of the examination are collectively shown in Tables 20 to 22.

[Table 20]
Various alloy chemical components used for corrosion resistance comparisons

| TP | Deposited chemical components (Cr, Ni: Content, Others: Amounts of addition) | | | | | | | | Si×B | Characteristics |
|---|---|---|---|---|---|---|---|---|---|---|
| | C | Si | Mo | Cr | Ni | B | Nb | Cu | | |
| 5-C | 1.5 | 2.5 | 4.5 | 16 | 7.5 | 1.0 | 4.0 | 4.6 | 2.5 | Low chromium |
| 10-C | 0.7 | 3.6 | 4.6 | 27 | 7.5 | 2.4 | 0.5 | 4.5 | 8.6 | with Mo |
| 17-C | 1.5 | 3.6 | 4.6 | 30 | 7.5 | 1.0 | 4.0 | 4.6 | 3.6 | with Mo |
| 16-C | 2.0 | 3.1 | 0 | 30 | 7.5 | 1.8 | 6.0 | 3.5 | 5.6 | without Mo |
| 14-C | 3.0 | 4.1 | 0 | 30 | 7.5 | 1.8 | 6.0 | 3.5 | 7.4 | without Mo |
| No. 39 | 5.4 | 4.0 | 0 | 23 | 5.0 | 0 | 6.0 | 3.3 | 0 | without Mo |
| 22-C | 1.5 | 3.5 | 4.6 | 25 | 12.5 | 0.5 | 4.0 | 4.6 | 1.8 | High Ni |
| 28-C | 1.5 | 3.5 | 4.6 | 24 | 7.5 | 0.5 | 6.0 | 4.6 Mn8 | 1.8 | High Mn |
| 29-C | 1.5 | 3.5 | 8.1 | 25 | 7.5 | 0.5 | 6.0 | 4.6 | 1.8 | High Mo |
| 30-C | 1.5 | 3.5 | 4.6 | 25 | 7.5 | 0.5 | 6.0 | 6.0 | 1.8 | High Cu |

[Table 21]

| Results of comparison tests for corrosion-resistant property of various alloys | | | |
|---|---|---|---|
| Material | Kind of steels | 10% sulfuric acid solution | 5% ferrous chloride solution |
| SS400 | Mild steel | 62.2 g | 5.27 g |
| SUS304 | Stainless steel | 9.6 g | 0.105 g |

(continued)

| Results of comparison tests for corrosion-resistant property of various alloys | | | |
|---|---|---|---|
| Material | Kind of steels | 10% sulfuric acid solution | 5% ferrous chloride solution |
| SUS310S | Stainless steel | 0.1 g | 0.01 g |
| Sulfuric acid resistant steel plate | Esten-1 steel | 127.2 g | 4.16 g |
| High chromium cast iron | Wear-resistant cast iron | 138.9 g | 26.3 g |
| GL | Clad welding rod | 48.3 g | 8.37 g |
| UF | Clad welding rod | 17.4 g | 4.93 g |
| Stellite No. 1 | Clad welding bare rod | 0.64 g | 0.09 g |
| Stellite No. 6 | Clad welding bare rod | 0.58 g | 0.02 g |
| No. 5-C alloy | Low Cr | 0.17 g | 0.116 g |
| No. 10-C alloy | with Mo | 0.56 g | 0.037 g |
| No. 17-C alloy | with Mo | 0.55 g | 0.210 g |
| No. 16-C alloy | without Mo | 2.60 g | 0.363 g |
| No. 14-C alloy | without Mo | 2.80 g | 1.404 g |
| No. 39 alloy | without Mo | 20.00 g | 6.400 g |
| No. 22-C alloy | High Ni | 0.03 g | 0.155 g |
| No. 28-C alloy | High Mn | 0.06 g | 1.486 g |
| No. 29-C alloy | High Mo | 0.03 g | 0.034 g |
| No. 30-C alloy | High Cu | 0.04 g | 0.068 g |

[Table 22]

| Corrosion test against 10% hydrochloric acid aqueous solution and 48% caustic soda aqueous solution | | | |
|---|---|---|---|
| Material | | 10% hydrochloric acid solution | soda aqueous solution |
| SS400 | | 28.00 g | 0.0210 g |
| SUS304 | | 2.84 g | 0.0008 g |
| SUS310S | | 0.11 g | 0.0006 g |
| Sulfuric acid resistant steel plate | | 2.42 g | 0.0183 g |
| High chromium cast iron | | 101.39 g | 0.0110 g |
| GL | | 32.58 g | 0.0110 g |
| UF | | 25.54 g | 0.0040 g |
| Stellite No. 1 | | 0.11 g | increased weight |
| Stellite No. 6 | | 0.14 g | increased weight |
| No. 10-C alloy | with Mo | 0.075 g | 0.0023 g |
| No. 17-C alloy | with Mo | 1.151 g | 0.0130 g |
| No. 16-C alloy | without Mo | 1.080 g | 0.0090 g |
| No. 14-C alloy | without Mo | 0.277 g | 0.0194 g |
| No. 39 alloy | without Mo | 0.435 g | 0.0210 g |

Since SUS310S was used as all the base materials for the corrosion tests, Cr was picked up from the base material so that the Cr content was increased. For example, in No. 10 alloy, the Cr content was 20% in the bending ductility test in the graph; however, in the corrosion test piece, the content was increased to Cr = 27%. Here, since Cr and Ni were of course picked up from the SUS310S base material, the contents of Cr and Ni of the deposited metal were increased. With respect to corrosion test numbers, following the numbered numeric value, C was put by taking the first letter C of "Corrosion". Therefore, all the alloys relating to the corrosion tests were indicated as alloys-C.

(7) Concerning 10% sulfuric acid corrosion (relating to alloys-C)

Comparisons of corrosive reductions caused by immersing them in a 10% sulfuric acid solution for 480 hours showed that No. 5, No. 22, No. 28, No. 29 and No. 30 alloys exerted a very good corrosion-resistant property in comparison with that of stellites No. 1 and No. 6. The wear coefficient WR indicating the wear resistance was in a range of 8 to 10, which was the same level of the wear resistance as that of stellite No. 1. Here, No. 10 and No. 17 alloys exerted the same level of the corrosion-resistant property as that of stellite, and the wear resistance thereof was the highest among the alloys of the present invention, with a wear coefficient WR of 3.3.

It was remarkable that these iron-based alloys exerted superior results in comparison with those of stellite alloys that are cobalt-based alloys; therefore, in order to confirm the reliability of the results, a 40% sulfuric acid solution corresponding to a concentration exerting a severe corrosive property was selected, and this solution was heated to a range from 50 to 70°C so that by immersing test pieces into this solution continuously four hours, the resulting amounts of corrosive reductions were compared with one another. Since it was difficult to carry out corrosion tests again over 480 hours, accelerating tests for a short period of time were carried out as simple confirming tests. Table 23 shows the results of the tests.

[Table 23]

| Results of 40% sulfuric acid solution-50 to 70°C accelerating corrosion tests (Test time: 4H) | | |
|---|---|---|
| Various alloy | Feature of alloy | Corrosive reduction |
| Stellite No. 1 | C=2.5%, cobalt-based alloy | 1.946 g |
| Stellite No. 6 | C=1.2%, cobalt-based alloy | 1.667 g |
| No. 5-C | Low Cr steel | 1.304 g |
| No. 22-C | 12.5% high Ni added steel | 1.768 g |
| No. 28-C | 8% high Mn added steel | 1.687 g |
| No. 29-C | 8% high Mo added steel | 1.679 g |
| No. 30-C | 6% high Cu added steel | 2.331 g |

In the accelerating tests also, the corrosion-resistant property against sulfuric acid that was the same as, or higher than those of stellites No. 1 and No. 6 was exerted. In particular, No. 5 alloy was very good, and although No. 30 alloy was slightly inferior to stellite, there was no big difference, and considered to be equivalent thereto.

Next, the effects of the carbon content exerted on corrosion resistance against sulfuric acid were examined. Tables 24 and 25 show the results of the examination.

[Table 24]

| Effects of carbon content exerted on corrosion resistance against sulfuric acid | | | | | | | |
|---|---|---|---|---|---|---|---|
| Alloy No. | C | Si | Cr | Ni | Mo | Cu | B |
| 12-C | 0.5 | 4.0 | 29 | 3.6 | 4.6 | 4.6 | 1.7 |
| 10-C | 0.7 | 3.6 | 27 | 3.3 | 4.6 | 4.5 | 2.4 |

(continued)

| Effects of carbon content exerted on corrosion resistance against sulfuric acid | | | | | | | |
|---|---|---|---|---|---|---|---|
| Alloy No. | C | Si | Cr | Ni | Mo | Cu | B |
| 17-C | 1.5 | 3.6 | 31 | 3.3 | 4.6 | 4.6 | 1.0 |
| A | 2.0 | 3.0 | 30 | 3.3 | 4.6 | 4.6 | 0 |
| B | 2.5 | 5.1 | 30 | 3.3 | 4.6 | 4.6 | 0 |
| C | 3.0 | 5.2 | 30 | 3.3 | 4.6 | 4.6 | 0 |

[Table 25]

| Comparison of immersion tests for 480 hours | | | |
|---|---|---|---|
| TP No | Amount of carbon addition | 10% sulfuric acid solution | 10% hydrochloric acid solution |
| 12-C | 0.50 | 0.5925 | 0.0941 |
| 10-C | 0.74 | 0.5608 | 0.0744 |
| 17-C | 1.5 | 0.5515 | 1.1507 |
| A | 2.0 | 0.8425 | 0.4529 |
| B | 2.5 | 1.4840 | 0.1062 |
| C | 3.0 | 1.3470 | 0.1058 |

In a range of carbon content from $0.5\% \leq C \leq 3.0\%$, the correlation to the corrosion resistance showed that the sulfuric acid corrosion was easily influenced by the carbon content, and in the case of 2% or more, the corrosion resistance against sulfuric acid tended to deteriorate. It is determined that boron gives no influences to sulfuric acid corrosion. Therefore, with respect to applications vulnerable to sulfuric acid corrosion, the amount of carbon addition should be set to 2% or less.

With respect to sulfuric acid corrosion, conventionally, iron-based wear-resistant metals are considered to be inapplicable; however, an iron-based alloy, which is a corrosion-resistant and wear-resistant material, is superior to stellites No. 1 and No. 6 containing 50 to 65% of expensive cobalt, and has the same as, or higher than that of No. 1 in wear resistance, has been invented. From the world-wide point of view, consuming the stellite alloy containing a large amount of cobalt having a rarity value for a simple wear-resistant purpose and for purposes incapable of recovering resources is wasteful use of effective resources; therefore, the alloy of the present invention should be used as an alternative metal for these from now on.

(8) Concerning hydrochloric acid corrosion

With respect to hydrochloric acid corrosion, No. 29 alloy, No. 10 alloy and No. 30 alloy were superior to the stellite alloy, and in particular, in the corrosion-resistant tests against 10% hydrochloric acid solution, No. 10 alloy was superior to stellites No. 1 and No. 6, and it is important to use No. 10 alloy for the purpose of corrosion resistance against hydrochloric acid.

The effects of the carbon content exerted on corrosion resistance against hydrochloric acid were examined. With respect to the corrosion resistance against hydrochloric acid, only the numeric value of No. 17 alloy exhibited a corrosive reduction about 10 times as high as those of the other alloys; however, no big differences were seen on the other alloys, with no effects being caused on the deposited metal by the carbon content. Certainly, stellite No. 1 had a tendency of being stronger in the corrosion resistance against hydrochloric acid than stellite No. 6 having a smaller carbon content, and different from the sulfuric acid corrosion, the corrosion resistance against hydrochloric acid is not affected by the amount of carbon addition.

In order to obtain the corrosion resistance as high as that of the stellite, an addition of expensive Mo is required. However, in recent years, a unit price of Mo alloy has abnormally risen, with the result that the addition of a large amount of this causes serious effects to the alloy cost, and might reduce the merit of using an inexpensive iron-based alloy. Consequently, the present inventors try not to find a corrosion-resistant property as high as the stellite, but to simultaneously invent an alloy that is superior in the corrosion-resistant property in comparison with mutually the same iron-based alloys. Those alloys are No. 16 and No. 14 alloys.

In comparison with high chromium cast iron produced by iron cast, No. 16 alloy exhibited a corrosion-resistant property about 54 times higher with respect to 10% sulfuric acid solution, about 72 times higher with respect to 5% ferrous chloride solution, and about 94 times higher with respect to 10% hydrochloric acid solution. Here, No. 14 alloy exhibited virtually the same tendency. In comparison with high carbon-high chromium cast-iron-type welding alloy GL, No. 16 alloy exhibited a superior corrosion-resistant property about 19 times higher with respect to 10% sulfuric acid solutin, and about 23 times higher with respect to 5% ferrous chloride solution; thus, it has a superior corrosion-resistant property in comparison with conventionally used high-chromium cast-iron-type alloys, and is proved to be sufficiently applicable to corrosion-resistant and wear-resistant purposes as the iron-based alloy.

EXAMPLES

The following description will discuss examples, and in comparison with comparative examples, the effects of the present invention will be clarified. In recent years, along with the price hike of petroleum, import costs of coals have risen in association therewith, and our country, which is lacking resources, is at present worried about fuel price hikes. In particular, in coal thermal plants, iron works and cement factories where enormous amounts of coals are used, the amount of use of expensive good coals is reduced, while the use of mixed coals with inexpensive coarse coals is increased. Among the coarse coals, coals having a great amount of sulfur content are present, and when these are stacked in stock yards outside, they get wet in rain, and have an increase in their moisture content, with the result that sulfur components contained in the coal come to react with water to produce diluted sulfuric acid.

In one example, a troughing conveyer is used in processes to introduce coals into a crusher, and since the bottom plate liner thereof is conventionally subjected to wear, a wear-resistant steel plate cladded with a high-carbon-high chromium cast-iron-type alloy has been used for this purpose. The chemical component thereof is a GL alloy that has been described before. Here, since the start of using mixed coals having a large amount of sulfur content, the service life thereof, which has been long since it has been subjected to simple wear, is shortened to only about 2.5 months due to corrosion caused by diluted sulfuric acid. When the developed alloy of the present invention was used as the bottom plate liner, neither corrosion nor wear has occurred therein, even after a lapse of one year, and the bottom plate liner has been continuously used.

In order to prove deterioration of high Si-containing steel, bead photographs were taken after the above-mentioned bending process. As a typical example, No. 55 alloy exhibited deterioration that was a defect of high Si-content, with the result that peeling were generated over the entire bead surface that had been pressed down by a press. However, in the case of No. 10-C alloy corresponding to the alloy of the present invention, its toughness was proved in a bending process with 200R.

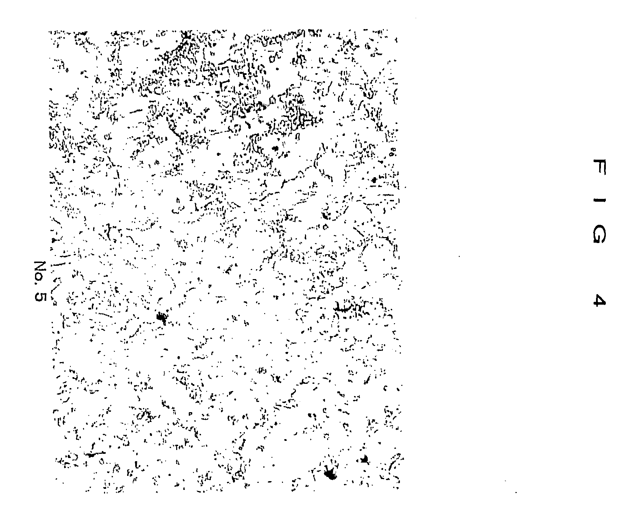

With respect to the amount of precipitation of chromium carbide depending on differences in chromium content, No. 5 (Cr=16%) low-chromium content steel and No. 10-C (Cr=27%) high-chromium content steel were compared with each other in their micro textures. As shown in Photograph 1 of Fig. 3 and Fig. 4, in the 10-C high-chromium content alloy, plate-shaped crystals of coarse bulky chromium borate ($Cr_2B$) were produced, while no crystals were seen in No. 5 alloy. Therefore, a low-chromium steel may be used for applications subjected to heavy impact wear, while a high-chromium steel may be used for applications subjected to only light impact wear.

BRIEF DESCRIPTIONS OF THE DRAWINGS

[Fig.1] Fig. 1 is a graph that shows effects of Si $\times$ B amount and Cr amount exerted on bending processability.

[Fig. 2] Fig. 2 includes photographs relating to alloy evaluations, and photograph 1 is a microscopic photograph showing a needle-shaped texture of a conventional alloy, and photograph 2 is a photograph of a sample cross section indicating bent cracks of the conventional alloy.

[Fig. 3] Fig. 3 includes photographs, and photograph 1 is a microscopic photograph showing a texture of alloy No. 10-C of the present invention, and photograph 2 is a photograph taken after a bent-crack test.

[Fig. 4] Fig. 4 is a microscopic photograph showing a texture of alloy No. 5 of the present invention.

**Claims**

1. An iron-based corrosion-resistant and wear-resistant clad welding material comprising: all percentages by weight, C: 0.5 to 2.5%, Si: 2.5 to 5.5%, Mn: 0 to 10% or less, Cr: 15% to 45%, Ni: 0 to 13%, Cu: 7% or less, Mo: 10% or less, B: 0.5% to 4.5%, and $0 \leq Nb + V \leq 8\%$, with remaining portions being composed of iron and incidental impurities.

**2.** The iron-based corrosion-resistant and wear-resistant clad welding material according to claim 1, further comprising:

in addition to components according to claim 1, one kind or two or more kinds of Ti: 1.0% or less, Al: 3% or less, rare earth metals: 0.5% or less in total, and N: 0.2% or less.

**3.** The iron-based corrosion-resistant and wear-resistant clad welding material according to claim 1 or 2, which is provided as a hand welding rod, a flux cored complex wire, a metallic powder or a cast rod.

**4.** A low carbon-high silicon-high chromium-boron-niobium-type iron-based corrosion-resistant and wear-resistant alloy comprising: all percentages by weight,
C: 0.5 to 2.5%, Si: 2.5 to 4.5%, Mn: 0 to 10% or less, Cr: 15% to 31%, Ni: 0 to 16%, Cu: 7% or less, Mo: 10% or less, B: 0.5% to 3.5%, and $0 \leq Nb + V \leq 8\%$,
wherein within a range of $15\% \leq Cr < 27\%$, $(Si \times B) \leq 2014/Cr^2 + 0.083Cr + 1.05$ is satisfied, within a range of $27\% \leq Cr \leq 31\%$, $1.25\% \leq (Si \times B) \leq 6.0\%$ is satisfied, within a range of $15\% \leq Cr < 20\%$, $(Si \times B) \geq 570/Cr^2 - 0.066Cr + 1.145$ is satisfied, and within a range of $20\% \leq Cr \leq 31\%$, $(Si \times B) \geq 1.25$ is satisfied.

**5.** The iron-based corrosion-resistant and wear-resistant alloy according to claim 4, further comprising:

in addition to components according to claim 4, one kind or two or more kinds of Ti: 1.0% or less, Al: 3% or less, rare earth metals: 0.5% or less in total, and N: 0.2% or less.

**6.** The iron-based corrosion-resistant and wear-resistant alloy according to claim 4 or 5, wherein a wear-resistant property and a corrosion-resistant property are the same as, or superior to cobalt-based alloys, stellites No. 1 and No. 6.

**7.** The iron-based corrosion-resistant and wear-resistant alloy according to claim 4 or 5, which is provided as a clad welding metal or cast steel.

F I G 1

(1) 1) Upper limit curve under which peeling and drops-off of hardened metal are caused:

$15\% \leqq Cr \leqq 27\%$

$Si \times B \leq 2014/Cr^2 + 0.083Cr + 1.05$

$27\% \leqq Cr \leqq 31\%$

$1.25\% \leqq Si \times B \leqq 6.0\%$

Product of Si × B (% by weight)

Chromium content in the first layer deposited metal (% by weight)

2) Lower limit curve that can keep the wear resistance WR
of hardened metal at the lowest value of 15:
within a range of $15\% \leqq Cr \leqq 20.0\%$,
the curve satisfies the following expression:
$Si \times B \geqq 570/Cr^2 - 0.066Cr + 1.145$ (3)

within a range of $20\% \leqq Cr \leqq 31\%$

$Si \times B \geqq 1.25$

F I G 2

PHOTOGRAPH 1

PHOTOGRAPH 2

F I G 3

PHOTOGRAPH 1

No. 10–C

PHOTOGRAPH 2

F I G 4

No. 5

**INTERNATIONAL SEARCH REPORT**

| | International application No. |
|---|---|
| | PCT/JP2006/315732 |

A. CLASSIFICATION OF SUBJECT MATTER
*B23K35/30*(2006.01)i, *C22C38/40*(2006.01)i

According to International Patent Classification (IPC) or to both national classification and IPC

B. FIELDS SEARCHED

Minimum documentation searched (classification system followed by classification symbols)
B23K35/30, C22C37/00-38/60

Documentation searched other than minimum documentation to the extent that such documents are included in the fields searched

| Jitsuyo Shinan Koho | 1922-1996 | Jitsuyo Shinan Toroku Koho | 1996-2006 |
|---|---|---|---|
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X <br> A | JP 11-226778 A (Aienuji Shoji Kabushiki Kaisha), <br> 24 August, 1999 (24.08.99), <br> Claims <br> (Family: none) | 1-3 <br> 4-7 |
| X <br> A | JP 6-45803 B2 (Sinto Brator Co., Ltd.), <br> 15 June, 1994 (15.06.94), <br> Claims <br> (Family: none) | 1,3 <br> 2,4-7 |
| A | JP 2001-279369 A (Hitachi Metals, Ltd.), <br> 10 October, 2001 (10.10.01), <br> Claims; table 1 <br> (Family: none) | 4-7 |

☒ Further documents are listed in the continuation of Box C.   ☐ See patent family annex.

| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
|---|---|

| Date of the actual completion of the international search <br> 06 November, 2006 (06.11.06) | Date of mailing of the international search report <br> 14 November, 2006 (14.11.06) |
|---|---|
| Name and mailing address of the ISA/ <br> Japanese Patent Office | Authorized officer |
| Facsimile No. | Telephone No. |

Form PCT/ISA/210 (second sheet) (April 2005)

39

**INTERNATIONAL SEARCH REPORT**

| International application No. |
|---|
| PCT/JP2006/315732 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-500840 A  (Warman International Ltd.), 13 February, 1992 (13.02.92), Claims & WO 91/02101 A1        & US 5252149 A | 4-7 |
| A | JP 50-149515 A  (Tokushu Seiko Kabushiki Kaisha), 29 November, 1975 (29.11.75), Claims; table 1 (Family: none) | 4-7 |
| A | JP 54-19371 B2  (Director General of Institute for Materials Research, Tohoku University), 14 July, 1979 (14.07.79), Claims; tables (Family: none) | 4-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 54081115 A

### Non-patent literature cited in the description

- Basics and Applications of Surface Treatment Techniques. Textbook for 14th Practical Welding Seminar. East Branch of Welding Society, 23 June 1988, vol. 1